# EUROPEAN PATENT APPLICATION

(11) **EP 2 677 757 A2**
(43) Date of publication of application: **25.12.2013**
(21) Application number: 12746770.2
(22) Date of filing: 20.02.2012
(51) Int. Cl.: H04N 21/2387

(54) **METHOD AND APPARATUS FOR THE SEAMLESS PLAYBACK OF CONTENT**

(30) Priority: 20.02.2011 US 201161444773 P; 04.03.2011 US 201161449097 P
(71) Applicant: LG Electronics Inc., Yeongdeungpo-gu Seoul 150-721 (KR)
(72) Inventor: LEE, Minsoo, Seoul 137-130 (KR); OE, Changhyun, Seoul 137-130 (KR); YANG, Seungryul, Seoul 137-130 (KR); PARK, Jangwoong, Seoul 137-130 (KR); JEON, Beomjin, Seoul 137-130 (KR); KIM, Byungjin, Seoul 137-130 (KR)
(74) Representative: Gunzelmann, Rainer
(86) International application number: PCT/KR2012/001243
(87) International publication number: WO 2012/112011

(57) **Abstract**

A method and apparatus for seamless playback of content and apparatus are provided. The method includes: discovering, by a second device, a first device which is currently playing back a content in response to a seamless playback request; requesting the first device to transmit a property set related to a currently played back asset; and seamlessly playing back the content on the basis of the property set transmitted from the first device. Accordingly, a content can be seamlessly played back between devices through various types of downloads or streaming handovers in an open content market environment which supports device compatibility and a cross-service between heterogeneous services.

## Description

### [Technical Field]

The present invention provides method and apparatus for seamlessly playing back content in various manners using a plurality of devices.

### [Background Art]

In general, a digital content, e.g., a multimedia content, an audio content, etc., has an advantage in terms of free distribution and easy acquisition, whereas it is easily exposed to an illegal activity such as an unlicensed copy, a leakage, etc., since data thereof can be copied infinitely without a loss. Therefore, in order to set up a desirable digital content usage environment, there is a need to support a content protection technique capable of reliably protecting the digital content from the illegal activity.

Digital rights management (DRM) is a general resource protection technique by which illegal copy and illegal use of digital resources are prevented so that only a user having a legitimate right can use a permitted digital content. The DRM employs various component technologies such as reliable content distribution and spreading, content usage right control based on a policy, encoding and decoding, etc.

However, the conventional DRM has a problem in that a user's content usage range is excessively limited since the DRM is characterized by its closed character in a technical and policy sense. For example, a digital content provided by a plurality of service vendors can be used only by a DRM device or software which employs DRM adopted by each service vendor. That is, a digital content protected by specific DRM can be used only by a device supporting the DRM. This problem acts as a factor which impairs flexibility of a distribution structure of the digital content.

Therefore, efforts are attempted recently so that various media contents can be freely shared and played back in an authorized network irrespective of a service vendor, a device manufacturer, or a product type. For example, techniques aiming to configure a domain of a plurality of devices which interwork with each other through a network and to mutually share a content between the devices in the domain are disclosed in Korean Patent Application No. 2009-0001973 and Korean Patent Application No. 2010-0062799.

For a framework capable of seamlessly playing back a content of a service vendor in a compatible manner in various devices, it is necessary to define a system entity and resources and to provide an operation model capable of generating and managing the defined system entity and resources. In addition, it is required to provide various operation scenarios by which a content desired by a user can be seamlessly played back in a highly satisfactory manner even if a handover is made between devices on the basis of the defined system resource and operation model.

### [Summary of Invention]

### [Technical Problem]

The present invention provides a system which enables a cross-service and a device compatibility service, and a method and apparatus for seamlessly playing back a content so that the content can be seamlessly played back in a plurality of devices on the basis of the system.

### [Technical Solution]

According to an aspect of the present invention, a method for seamless playback of content is provided. The method includes: discovering, by a second device, a first device which is currently playing back a content in response to a seamless playback request; requesting the first device to transmit a property set related to a currently played back asset; and seamlessly playing back the content on the basis of the property set transmitted from the first device.

In the aforementioned aspect of the present invention, the property set related to the currently played back asset may include: a content identifier (ID) for identifying the content; an asset physical ID for identifying a physical asset corresponding to the content ID; and playback start time information indicating a playback start time for the seamless playback.

In addition, the method may further include: transmitting a streaming request to any one of a streaming provider and the first device to request to stream the content starting from a time corresponding to the playback start time information; and receiving from an entity which receives the streaming request a streaming content from the start time corresponding to the playback start time information.

In addition, the method may further include: receiving download location information for downloading the content from the first device; transmitting a download request to any one of the download provider and the first device to download the content, on the basis of the download location information; downloading the content from an entity which receives the download request; and playing back the downloaded content from the start time corresponding to the playback start time information.

According to another aspect of the present invention, an apparatus for seamless playback of content is provided. The apparatus includes: an interface for discovering a first device which is currently playing back a content in response to a seamless playback request, and for requesting the first device to transmit a property set related to a currently played back asset; and a processor for seamlessly playing back the content on the basis of the property set transmitted from the first device. The property set related to the currently played back asset may include: a content ID for identifying the content; an asset physical ID for identifying a physical asset corresponding to the content ID; and playback start time information indicating a playback start time for the seamless playback.

In addition, the interface may transmit a streaming request to any one of a streaming provider and the first device to request to stream the content starting from a time corresponding to the playback start time information, and receive from an entity which receives the streaming request a streaming content from the start time corresponding to the playback start time information.

In addition, the interface may receive download location information for downloading the content from the first device, transmit a download request to any one of the download provider and the first device to download the content, on the basis of the download location information, and download the content from an entity which receives the download request. The processor may play back the downloaded content from the start time corresponding to the playback start time information.

### [Advantageous Effects]

As described above, the present invention can provide a user with a content service or an open content market service which supports a cross-service independent of a device and a device compatibility service. In addition, in an environment of the open content market service, the content can be seamlessly played back in a plurality of devices by providing a streaming handover or a content download between various types of devices.

### [Description of Drawings]

FIG. 1 is a block diagram showing a structure of a system for providing an open content market service.

FIG. 2 is a block diagram showing a module structure of a device for an open content market service.

FIG. 3 shows an example of performing a content handover by a downloading control between devices according to an embodiment of the present invention.

FIG. 4 shows an example of seamlessly playing back a content between devices according to another embodiment of the present invention.

FIG. 5 is a flowchart showing an example of downloading a streaming content of a first device by a second device in an open content market service system according to another embodiment of the present invention.

FIG. 6 is a flowchart showing an example of downloading a streaming content of a first device by considering a capability of a second device in an open content market service system according to another embodiment of the present invention.

FIG. 7 is a flowchart showing an example of streaming a streaming content of a first device by a second device in an open content market service system according to another embodiment of the present invention.

FIG. 8 is a flowchart showing an example of downloading a streaming content of a first device by a second device in an open content market service system, with the intervention of a retailer, according to another embodiment of the present invention.

FIG. 9 is a flowchart showing an example of seamlessly playing back a content, which is played back in a streaming or downloading manner in a first device D1, in a second device D2 according to another embodiment of the present invention.

FIG. 10 is a flowchart showing an example of resuming a playback of a media file after transmitting the media file to a second device while playing back the media file, i.e., a content stored in a first device, according to another embodiment of the present invention.

FIG. 11 is a flowchart showing an example of resuming a playback of a content played back by a first device in a streaming manner from a DMS after downloading the content from the DMS to a second device according to another embodiment of the present invention.

FIG. 12 is a flowchart showing an example of seamlessly playing back a content, which is watched in a first device in a streaming manner, in a second device in a streaming manner at the request of the second device according to another embodiment of the present invention.

FIG. 13 is a flowchart showing an example of seamlessly playing back a content, which is watched in a first device in a downloading manner, in a second device in a streaming manner at the request of the second device according to another embodiment of the present invention.

FIG. 14 is a block diagram showing a basic structure of an open content market service system from the viewpoint of performing a content streaming handover between devices through streaming, as an example of involving an access portal.

FIG. 15 shows a table for describing a field structure of a stream queue and a streaming queue item according to the present invention.

FIG. 16 is a flowchart for describing an operational flow of a stream queue manager according to the present invention.

FIG. 17 is a flowchart showing an example in which an access portal identifies a new streaming provider supporting a target device, i.e., a second device, when a content streaming handover is performed according to another embodiment of the present invention.

FIG. 18 is a flowchart showing an example in which an access portal identifies a new second retailer when a content streaming handover is performed, and sends to the second retailer a request for a new streaming provider supporting a target device, i.e., a second device, according to another embodiment of the present invention.

FIG. 19 is a flowchart showing an example of performing a content streaming handover under the control of a coordinator according to another embodiment of the present invention.

FIG. 20 is a flowchart showing an example in which a second retailer identifies a second streaming provider when a content streaming handover is performed, and sends a new streaming request to the second streaming provider according to another embodiment of the present invention.

FIG. 21 is a flowchart showing an example in which a second retailer identifies a second streaming provider when a content streaming handover is performed, and performs profile matching according to another embodiment of the present invention.

FIG. 22 is a flowchart showing an example in which a second streaming provider manages a stream queue when a content streaming handover is performed according to another embodiment of the present invention.

FIG. 23 is a flowchart showing an example in which a second device seamlessly plays back a content, watched in a streaming manner in a first device, in a streaming manner on the basis of playback information acquired from the first device according to another embodiment of the present invention.

FIG. 24 is a flowchart showing an example in which a second device downloads a content watched in a streaming manner in a first device on the basis of playback information acquired from the first device and seamlessly plays back the content according to another embodiment of the present invention.

### [Mode for Invention]

Although various modifications may be made in the present invention, and several exemplary embodiments of the present invention may be provided, the present invention will hereinafter be described in connection with what is presently considered to be practical exemplary embodiments.

However, it is to be understood that the invention is not limited to the disclosed embodiments, but, on the contrary, is intended to cover various modifications and equivalent arrangements included within the spirit and scope of the appended claims.

It will be understood that although the terms first and second are used herein to describe various elements, these elements should not be limited by these terms. These terms are only used to distinguish one element from another element. Thus, a first element discussed below may be termed a second element, and similarly, a second element may be termed a first element without departing from the scope of the present invention.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the invention. As used herein, the singular forms "a", "an", and "the" are intended to include the plural forms as well, unless the context clearly indicates otherwise. It will be further understood that the terms "comprises" and/or "comprising," or "includes" and/or "including", when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, exemplary embodiments of the present invention will be described in detail with reference to accompanying drawings.

First, the present invention provides an open content market service supporting a cross-service and a device compatibility service.

The cross-service may imply a service capable of supporting compatibility between a plurality of content service vendors or between a plurality of retail service vendors. For example, by using an account of an open content market service, a user can receive a service from a plurality of retail vendors or a plurality of content vendors in association with the open content market service as if a content provision service is provided from one content vendor or retail vendor. That is, in order to purchase contents respectively from a plurality of content vendors, the user does not have to obtain an authentication of each content vendor to purchase the content. Instead, it is enough to obtain an authentication of the open content market service in order for the user to purchase the contents from the plurality of content vendors and use the purchased contents.

In addition, the device compatibility service may imply a service by which a purchased content can be shared and used between devices in a user domain. For example, the user may use a smart phone to watch a content purchased through the smart phone or may use a PC or a TV set to watch the content. In addition, the purchased content may be transmitted from the smart phone to the PC or the TV, or a streaming service provided through the smart phone may be provided to the PC or the TV.

A content circulated by the open content market service may include all various types of digital contents that can be circulated in a digital network environment such as a multimedia content (e.g., a movie or broadcasting program, a Video On Demand (VoD) content, etc.), a voice content, software, etc.

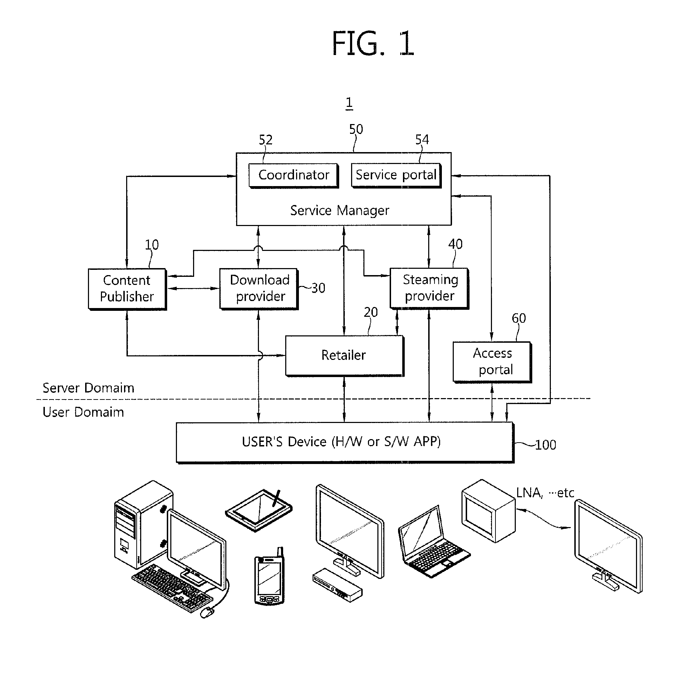

FIG. 1 is a block diagram showing a structure of a system for providing an open content market service.

Referring to FIG. 1, an open content market service system 1 may be divided into a server domain and a user domain.

The server domain may manage a service and policy for the open content market service and may provide a content to the user domain on the basis of the service and policy. That is, the server domain may imply a domain including servers for providing the open content market service. The server domain may provide a content to the user domain and manages a service. For example, the service domain may perform content production, sales, distribution, policy management, right constraint, etc.

The server domain may include a content publisher 10, a retailer 20, a download provider 30, a streaming provider 40, a service manager 50, an access portal 60, etc. The content publisher 10, the retailer 20, the download provider 30, the streaming provider 40, the access portal 60, etc., may each have a communication interface for the open content market service, and may communicate with each other or with the service manager 50 on the basis of the communication interface.

For example, the content publisher 10 may be a server of a movie studio, a broadcasting station, a record company, etc. The content publisher 10 may be affiliated with the retailer 20, the service manager 50, etc., so as to distribute contents owned by the content publisher 10 to a consumer domain side.

The content publisher 10 may perform, for example, content and metadata creation and identification, content packaging and encryption, content and content encryption key delivery, etc. In addition, the content publisher 10 may provide content encryption keys and metadata to the download provider 30, may provide metadata to the retailer 20, and may provide content and metadata to the streaming provider 40.

The retailer 20 may imply a consumer-facing storefront for selling the content to the user. For example, the retailer 20 may be a sales server for selling the content to the user by accessing to a device 100 of the consumer domain. The retailer 20 may include a function for managing a retail account. For example, the retailer 20 may include a retailer locker for managing a retailer account. The user may access to the retailer 20 via the device 100 in the user domain to search or browse a content list, and thereafter may purchase a desired content. Meanwhile, the retailer 20 may include an open content market locker for managing an open content market service account. The open content market locker of the retailer 20 may interwork with the service manager 50.

The download provider 30 may imply a download server for downloading the content to the device 100 of the user domain. The download provider 30 may perform, for example, content management and delivery, native DRM license management, etc. The download provider 30 may also be referred to as a digital service provider (DSP).

The streaming provider 40 may imply a streaming server for streaming a content to the device 100 of the user domain. The streaming provider 40 may perform, for example, content management, streaming service, etc. For example, the streaming provider 40 may stream a content associated with a right of a user account to the device 100. The streaming provider 40 may also be referred to as a locker access service provider (LASP).

The service manager 50 may imply a service server for managing the open content market service. For example, the service manager 50 may manage and administer roles for providing a device compatibly service and a cross-service such as an account for the open content market service, a device domain, a right locker, etc.

The service manager 50 may store and administer information required to manage the open content market service, such as a service policy, right information, domain information, authentication information, etc. The server manager may include a coordinator 52 and an open content market service portal 54.

The coordinator 52 may perform primary functions related to the management of the open content market service. For example, the coordinator 52 may perform content ID and metadata registry, user and account management, DRM domain managers, device management, rights management, user and node authentication and authorization, etc.

The open content market service portal 54 may manage a portal for the open content market service. For example, the open content market service portal 54 may manage a client device portal based on a resource-oriented application programming interface (REST) and a web portal based on a hypertext markup language (HTML), and may perform user authentication and authorization, etc.

The access portal 60 may perform a function for allowing the device 100 to interwork with entities of the server domain so that the open content market service can be provided to the device 100 of the user domain. For example, the access portal 60 may imply a device proxy server for the open content market service. The access portal may provide another path through which the open content market service is provided to the device 100. The access portal 60 may operate, for example, based on a web, and may include a user interface, a device API, etc., for a connected device.

In addition, the access portal 60 may allow a device not having a function as a client for the open content market service, e.g., a legacy device, to be able to receive the open content market service. For example, a device which does not have software for supporting the open content market service or which is not compatible may interwork with a service manager or the like via the access portal 60. The access portal 60 may be included in the server domain in a functional aspect, and may be included in any domain, i.e., either the server domain or the user domain, in a physical aspect.

Meanwhile, the user domain may include the device 100 of a user which receives the open content market service. The device 100 may be a fixed-type terminal such as a PC, a set-top box, etc., or may be a portable terminal such as a smart phone, a personal digital assistance (PDA), a notebook, etc. The device 100 may have modules for receiving the open content market service.

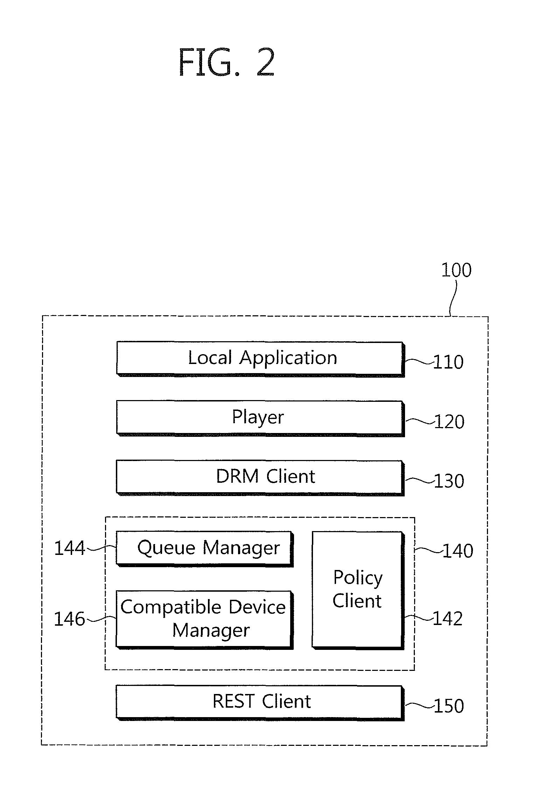

FIG. 2 is a block diagram showing a module structure of the device 100 for an open content market service.

Referring to FIG. 2, the device 100 may include a local application 110, a player 120, a DRM client 130, a device compatible service client 140, a REST client 150, etc.

The local application 110 may imply an application for the open content market service. For example, the local application 110 may be a user agent for providing a user interface, a service menu, a service selection, etc, so that the open content market service can be provided to a user side.

The player 120 is used to play back a content provided through the open content market service, and for example, may be a media player or the like capable of playing back a download content or a streaming content. The DRM client 130 may perform a DRM-related process of the device 100. The REST client 150 may perform a function for interworking with a device portal of the service manager 50 when a service is provided.

The device compatible service client 140 may perform functions required to allow the device 100 to be able to receive a compatible service with respect to another device (e.g., a DLNA device, etc.) in the user domain. The device compatible service client 140 may include a policy client 142, a queue manager 144, a compatible device manager 146, etc.

The policy client 142 may control the device compatibility service on the basis of the service policy. The policy client 142 may interwork with entities of the server domain, for example, a coordinator, etc., which manages the service policy in the service manager 50.

The queue manager 144 may perform a function for managing a queue which stores information related to handover reservation, playback reservation, download reservation, streaming reservation, etc, of the content. That is, the queue manager 144 may manage a reservation for handover, playback, download, streaming, etc., of the content. For example, the queue manager 144 may include a stream queue manager, a download manager, etc. The queue manager 144 may request a content playback reservation or download reservation to another interworking device, or may reserve content playback or download of the device 100 on the basis of the content playback reservation or download reservation received from another device.

The compatible device manager 146 may manage other devices compatible with the device 100. For example, the compatible device manager 146 may perform a function for discovering a device to be interworked, for managing a status of the interworking device, and for transmitting or receiving a necessary message with respect to the interworking device.

The above description relates to the structure of the open content market service system 1 which implements the open content market service providing the cross-service compatible between heterogeneous services and the device compatibility service. According to the open content marker service system 1, a free and flexible content service can be provided to the user irrespective of an individual content service vendor or a device type.

Hereinafter, on the basis of at least a part of the structure of the open content market service system 1, various embodiments will be described in which a user can seamlessly play back a content even if a device for watching the content is changed.

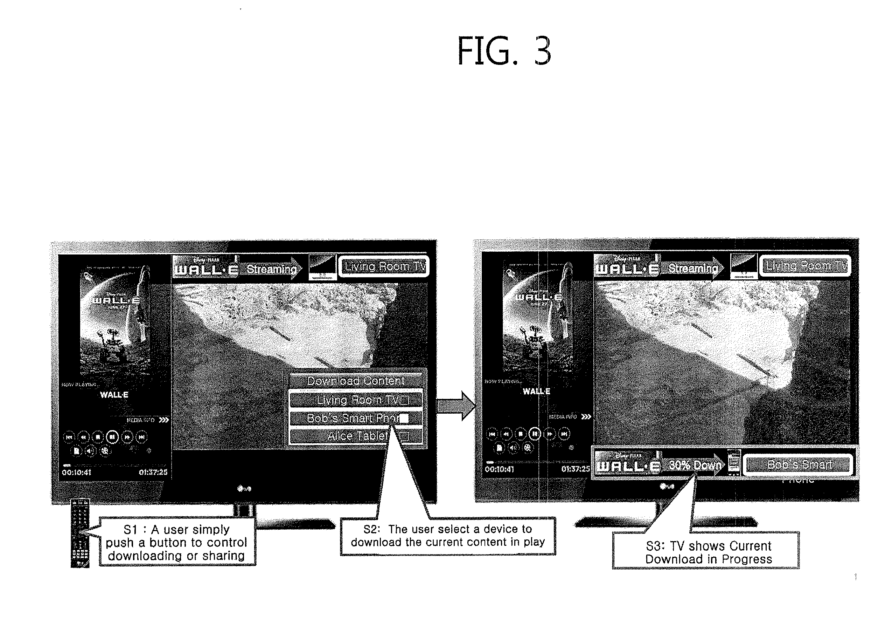

FIG. 3 shows an example of performing a content handover by a downloading control between devices according to an embodiment of the present invention. The present embodiment shows a user interface provided through a TV when a viewer downloads and watches a content watched through the TV in a living room by using a streaming service.

Referring to FIG. 3, the user selects a button provided in a TV remote controller while watching a multimedia content through the TV in the living room at present (step S1). The button may be a button for controlling the downloading or sharing of the content. In addition, the TV and the smart phone may be a device which supports a device compatibility service, similarly to the device of FIG. 2.

Then, the TV may display a content download menu in response to a signal received from the remote controller. The content download menu may display a list of compatible devices for downloading the currently watched content. In this case, the compatible devices included in the list may be devices that can interwork with the TV through a DLNA, etc.

The user may select a device for watching the content from the display list (step S2). For example, in the example of FIG. 3, the user selects 'Bob's Smart Phone'. Accordingly, the TV may add a currently played-back content to a downloading queue of the selected device. When downloading of the content proceeds in the selected device, e.g., 'Bob's Smart Phone', the TV may display a download progress thereof (step S3).

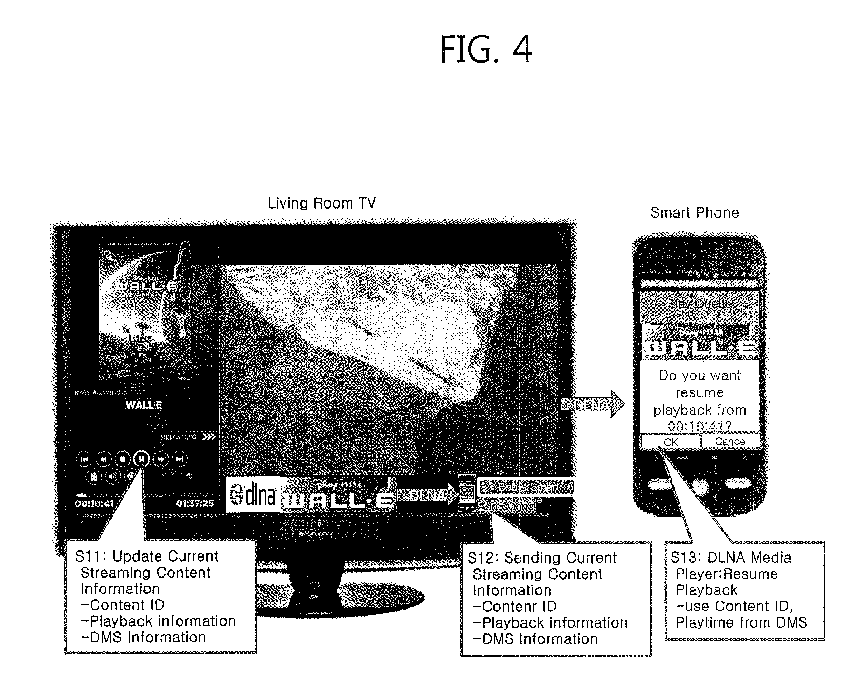

FIG. 4 shows an example of seamlessly playing back a content between devices according to another embodiment of the present invention. The present embodiment shows each of user interfaces provided through a TV and a smart phone when a content watched through the TV in a living room by using a streaming service is seamlessly watched by a user through streaming in the smart phone.

As illustrated in FIG. 4, if a viewer selects a button provided in a TV remote controller while watching a multimedia content through a TV in a living room at present by using a streaming service, the TV may display a content download menu including a list of compatible devices in response to a signal received from the remote controller.

In this case, the TV updates information of a current streaming content (step S11). The information of the streaming content may include a content ID, playback information, content source information, etc.

The playback information may imply a property set of an asset currently played back. The playback information may include information indicating a playback start time at which a target device starts a playback. For example, the playback start time information may be information of 'hour/minute/second (HH:MM:SS)' such as a time at which the content watching is handed over or a time of ending the playback in the TV in the living room for the handover. The content source information may be information capable of identifying a source which can download the content. For example, the content source information may be a URL or URI of the streaming provider 40, and if the source exists in a DLNA network, may be digital media source (DMS) information.

If the user selects a desired device, e.g., 'Bob's Smart Phone', from the list of the devices, the TV transmits the content information to the selected device (step S12). That is, the TV transmits the content ID, the playback information, the content source information, etc., to the 'Bob's Smart Phone'.

The 'Bob's Smart Phone' which receives the content information from the TV may display a playback resumption inquiry message, e.g., 'Do you want resume playback from 00:10:41(i.e., a start time corresponding to playback information)?', on the basis of the content ID and the playback information (step S13), and when the user selects a watch request, may access to a content source corresponding to the content source information and thus receive and play back a streaming content starting from the start time corresponding to the playback information. Therefore, the user may seamlessly watch the content through a smart phone after stopping TV watching while watching the content through the TV.

Hereinafter, various embodiments for performing a content handover on the basis of an open content market service system will be described according to other exemplary embodiments of the present invention. A user interface of a device for a content handover to be described hereinafter may be based on the user interface illustrated in FIG. 3 or FIG. 4. In addition, although an operation of each device is generally described in a logical sense hereinafter, it is apparent for example that, in a hardware sense, communication between devices can be performed by an interface of the devices, an operation requiring processing such as an arithmetic operation, etc, can be performed by a computer processor of the device, and data can be stored by a memory.

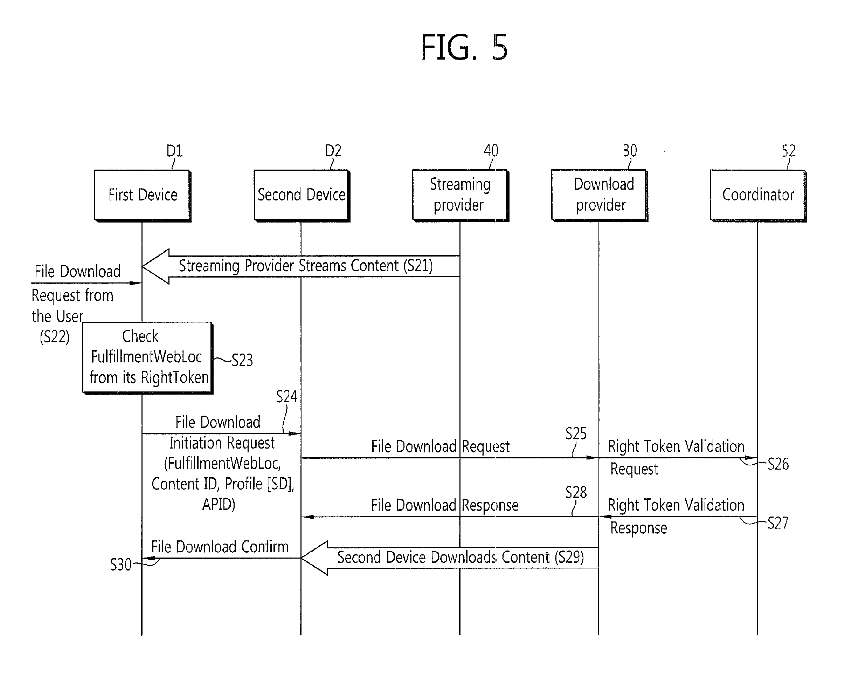

FIG. 5 is a flowchart showing an example of downloading a streaming content of a first device by a second device in the open content market service system 1 according to another embodiment of the present invention.

Referring to FIG. 5, it is assumed that a first device D1 and a second device D2 are registered to an account for an open content market service. The first device D1 has a right token that can use a content corresponding to a content ID. The first device D1 receives the content from a streaming provider 40 on the basis of the right token in a streaming manner, and plays back the content (step S21).

In this case, if the user calls a download menu by manipulating an input means such as a remote controller or the like and thereafter selects the second device D2 as a target device in order to download a content currently watched through the first device D1 to the second device D2, the first device D1 may receive a request to download the content to the second device D2 (step S22).

According to this request, the first device D1 may check download location information from a right token associated with a user account (step S23). The right token is associated with the user account, and represents a right corresponding to the content. For example, the right token may include user's right information on the content. The right token may be a license that can be commonly used in the open content market service.

The right token may include the download location information. The download location information may imply location information for downloading the content. For example, the download location information may be a location (e.g., URL, etc.) of a web page for downloading the content or a direct HTTP link for accessing to a downloading content. The download location information is indicated by 'FulfillmentWebLoc' in the drawings, including FIG. 5, which show the download location information in the present invention.

Subsequently, the first device D1 may transmit a file download initiation request to the second device D2 (step S24). The file download initiation request may include the aforementioned download location information, a content ID, a profile, an asset physical ID (APID), etc.

The profile may include definition information of a content to be downloaded. For example, the profile may be information indicating at least one of high definition (HD), standard definition (SD), mobile definition (MD), etc.

To generate the profile information, the first device D1 may acquire a capability of the second device D2 when a device discovery is performed to discover the second device D2 or may acquire the capability of the second device D2 through an additional capability inquiry. The first device D1 may generate the profile on the basis of the acquired capability. Meanwhile, the first device D1 may generate the profile according to a default without having the acquire the capability of the second device D2, or may generate the profile according to predetermined information, or may generate the profile on the basis of a user input. In the example of FIG. 5, the first device D1 sets the profile by default to standard definition 'SD' instead of collecting the capability of the second device D2. An example of collecting a capability and then setting a profile on the basis of the collected capability will be described later in greater detail through descriptions based on another embodiment.

The asset physical ID may imply a physical asset related to the content, for example, information capable of accessing or identifying a medial file. For example, if it is assumed that the content ID is information for identifying a movie "Avatar", the asset physical ID may be information capable of identifying a physical "Avatar file". At least one physical asset may correspond to the content ID. For example, if a content watched by a viewer is the movie "Avatar", the "Avatar file" corresponding to "Avatar" may be one or plural in number. Therefore, if the "Avatar" file is plural in number, it may be difficult to identify a specific file to be downloaded among a plurality of "Avatar files" when using only the content ID, and thus the asset physical ID may be used to identity a physical asset. The asset physical ID may be information in a form of, for example, URL, URI, or a file name. The asset physical ID may correspond to each profile.

Upon receiving the file download initiation request, the second device D2 transmits a file download request to a download provider 30 to request to download the content on the basis of the download location information (step S25). Upon receiving the file download request, the download provider 30 transmits a right token validation request to a coordinator 52 to request to validate a right token (step S26). Herein, the right token validation may be for validating whether the user has a download right on the content.

The coordinator 52 confirms whether the user has the download right on the content through the right token validation. If it is confirmed that the user has the right, in response to the right token validation request, the coordinator 52 transmits a right token validation response to the download provider 30 to report that the requested download is authorized (step S27).

Upon receiving the right token validation response, the download provider 30 may transmit a file download response to the second device D2 to report that the content is downloaded (step S28), and may download the content to the second device D2 (step S29).

In this case, the download provider 30 may report a content download status to the second device D2. On the basis of this, the second device D2 may display the content download status. In addition, the second device D2 may transmit the content download status to the first device D1. Then, the first device D1 may also display the content download status.

Upon the completion of the content download, the second device D2 may transmit a file download confirm to the first device D1 to report the completion of the content download (step S30). On the basis of the received file download confirm, the first device D1 may display a message for indicating the completion of the content download to a screen.

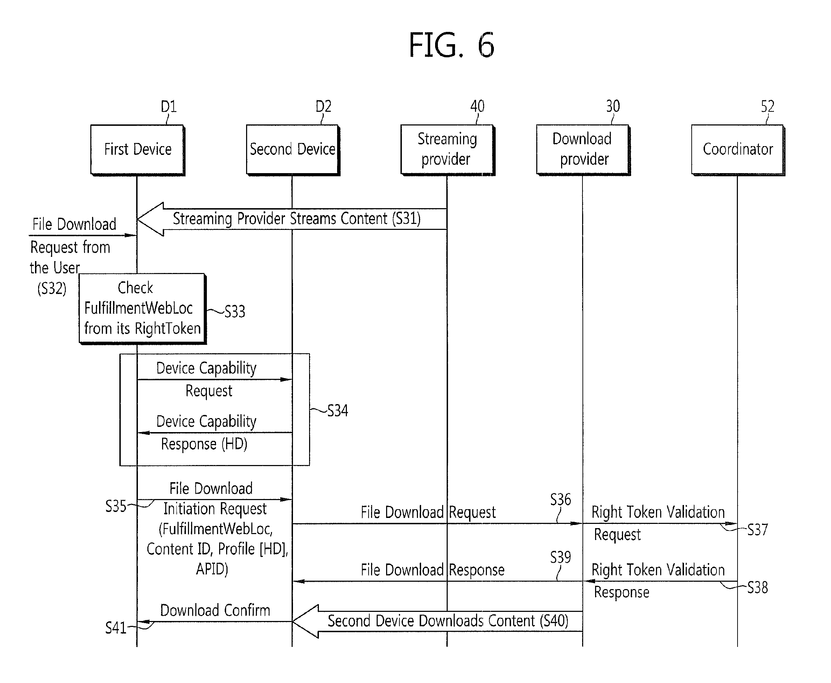

FIG. 6 is a flowchart showing an example of downloading a streaming content of a first device D1 by considering a capability of a second device D2 in the open content market service system 1 according to another embodiment of the present invention.

Referring to FIG. 6, the first device D1 may play back a content received from a streaming provider 40 in a streaming manner (step S31). In this case, if the user calls a download menu by manipulating an input means such as a remote controller or the like and thereafter selects the second device D2 as a target device in order to download a content currently watched through the first device D1 to the second device D2, the first device D1 may receive a request to download the content to the second device D2 (step S32).

Upon receiving the request, the first device D1 may check download location information from a right token associated with a user account (step S33). The right token is associated with the user account, and may be right information for using the content, that is, right information of the user. The right token may include the download location information. For example, the download location information may be a URL or URI capable of accessing to a download web page or a media file.

Subsequently, the first device D1 collects capability information of the second device D2 from the second device D2 (step S34). For example, the first device D1 may request the capability information of the second device D2 to the second device D2, and in response thereto, may receive the capability information of the second device D2. The capability of the second device D2 may include profile information of a content that can be played back in the second device D2.

Next, the first device D1 may transmit a file download initiation request to the second device D2 (step S35). The file download initiation request may include 'FulfillmenWebLoc' as download location information, a content ID, a profile, an asset physical ID (APID), etc.

Herein, the profile may be definition information of a content to be downloaded. On the basis of the capability received from the second device D2, the first device D1 may use the profile to designate definition information which can be effectively played back in the second device D2. For example, as shown in the example of FIG. 6, if it is determined that the second device D2 supports a high-definition playback of the content on the based on the collected capability of the second device D2, the first device D1 may set the profile to 'HD'. Meanwhile, the first device D1 may set the profile to mobile definition 'MD' if the second device D2 is a mobile device, and may set the profile to 'SD' if the second device D2 supports only a standard-definition playback.

Upon receiving the file download initiation request, the second device D2 transmits a file download request to a download provider 30 to request to download the content on the basis of the download location information (step S36). Upon receiving the file download request, the download provider 30 transmits a right token validation request to a coordinator 52 to request to validate a right token (step S37). Herein, the right token validation may be for validating whether the user has a download right on the content.

The coordinator 52 confirms whether the user has the download right on the content through the right token validation. If it is confirmed that the user has the right, in response to the right token validation request, the coordinator 52 transmits a right token validation response to the download provider 30 to report that the requested download is authorized (step S38).

Upon receiving the right token validation response, the download provider 30 may transmit a file download response to the second device D2 to report that the content is downloaded (step S39), and may download the content to the second device D2 (step S40).

In this case, the download provider 30 may report a content download status to the second device D2. On the basis of this, the second device D2 may display the content download status. In addition, the second device D2 may transmit the content download status to the first device D1. Then, the first device D1 may also display the content download status.

Upon the completion of the content download, the second device D2 may transmit a file download confirm to the first device D1 to report the completion of the content download (step S41). On the basis of the received file download confirm, the first device D1 may display a message for indicating the completion of the content download to a screen.

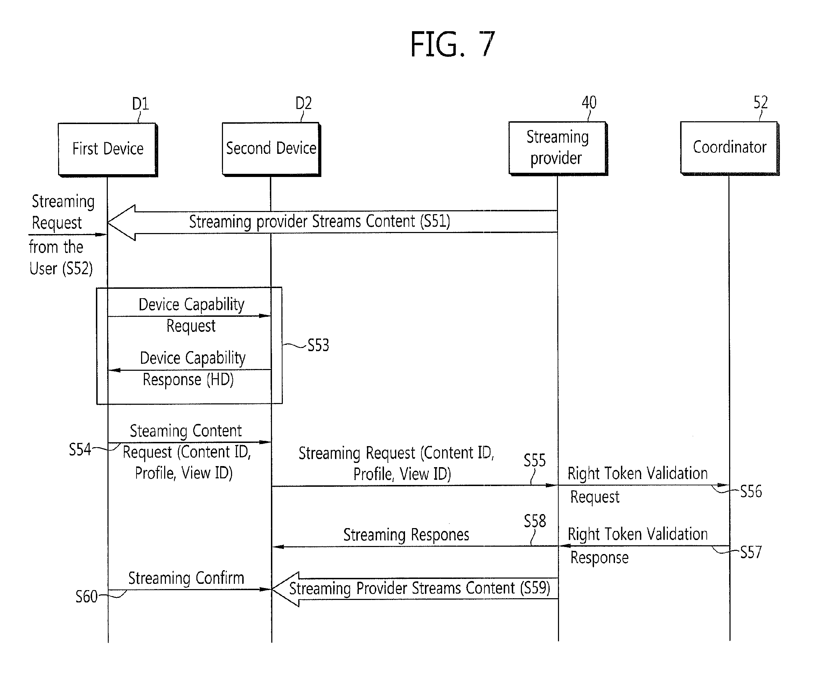

FIG. 7 is a flowchart showing an example of streaming a streaming content of a first device D1 by a second device D2 in the open content market service system 1 according to another embodiment of the present invention.

Referring to FIG. 7, the first device D1 may play back a content received from a streaming provider 40 in a streaming manner (step S51). In this case, if the user calls a streaming menu by manipulating an input means such as a remote controller or the like and thereafter selects the second device D2 as a target device in order to watch a content currently watched through the first device D1 in the second device D2 in the streaming manner, the first device D1 may receive a request to stream the content to the second device D2 (step S52).

Upon receiving the request, the first device D1 collects capability information of the second device D2 from the second device D2 (step S53). For example, the first device D1 may request the capability information of the second device D2 to the second device D2, and in response thereto, may receive the capability information of the second device D2. The capability of the second device D2 may include profile information of a content that can be played back in the second device D2.

Next, the first device D1 may transmit a streaming content request to the second device D2 to request to stream a content (step S54). The streaming content request may include a content ID, a profile, a view ID, etc. Herein, the view ID may imply identification information to be used by the device when the content is displayed in a screen.

The profile may be definition information of a content to be streamed. On the basis of the capability received from the second device D2, the first device D1 may use the profile to designate definition information which can be effectively played back in the second device D2. For example, as shown in the example of FIG. 7, if it is determined that the second device D2 supports a high-definition playback of the content on the based on the collected capability of the second device D2, the first device D1 may set the profile to 'HD'.

Upon receiving the streaming content request, the second device D2 transmits a streaming request to the streaming provider 40 to request to stream the content (step S55). The streaming request may include a content ID, a profile, a view ID, etc.

Upon receiving the streaming request, the streaming provider 40 transmits a right token validation request to a coordinator 52 to request to validate a right token (step S56). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the streaming provider 40 to report that the requested streaming is authorized (step S57).

Upon receiving the right token validation response, the streaming provider 40 may transmit a streaming response to the second device D2 to report that the content is streamed (step S58), and may stream the content to the second device D2 (step S59).

In this case, the second device D2 may report a content streaming status to the first device D1 (step S60). Then, the first device D1 may display a content report message in a screen on the basis of the content streaming status.

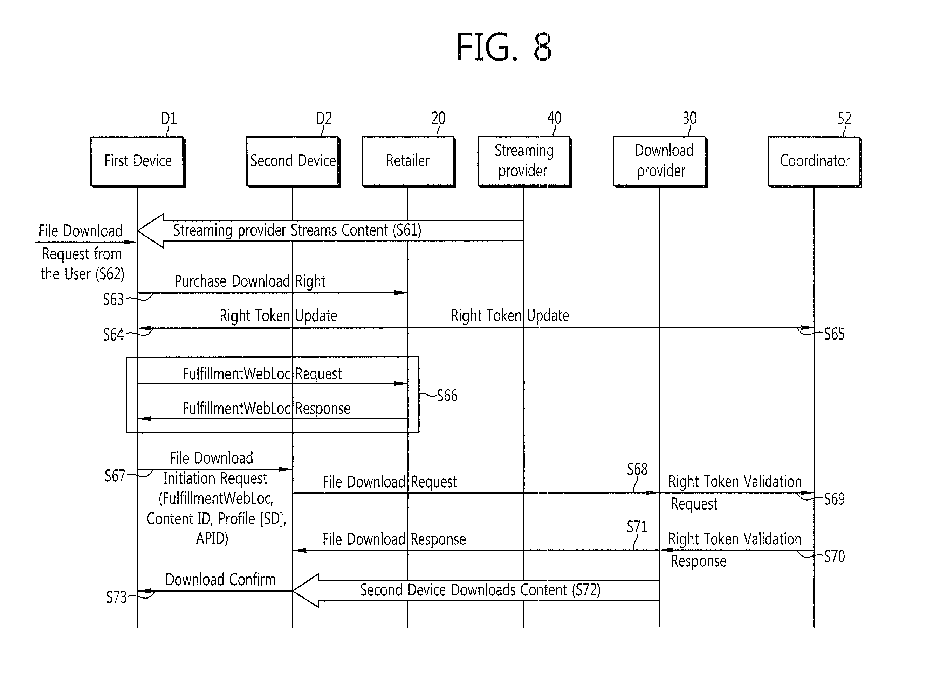

FIG. 8 is a flowchart showing an example of downloading a streaming content of a first device D1 by a second device D2 in the open content market service system 1, with the intervention of a retailer 20, according to another embodiment of the present invention.

Referring to FIG. 8, the first device D1 plays back a content received from a streaming provider 40 in a streaming manner (step S61). In this case, if the user calls a download menu by manipulating an input means such as a remote controller or the like and thereafter selects the second device D2 as a target device in order to download a content currently watched through the first device D1 to the second device D, the first device D1 may receive a request to download to the content the second device D2 (step S62).

Upon receiving the request, the first device D1 may check a right token associated with a user account. In this case, if the user does not have a right to download the content, the first device D1 may display a message indicating that the user does not have the download right, thereafter access a site of the retailer 20 on the basis of a purchase URL included in the right token, and purchase the download right of the content (step 63).

The retailer 20 may update the right token of the user by considering right information which varies depending on the purchasing. For example, the retailer 20 may update content download purchase information of the user as the user purchases the content download right, and may deliver the updated right token to the first device D1 and the coordinator 52 (steps S64 and S65).

Subsequently, the first device D1 may check whether 'FulfillmentWebLoc' which is download location information exists in the updated right token. In this case, if the download location information does not exist in the right token, the first device D1 may acquire the download location information from the retailer 20 (step S66). For example, the first device D1 may transmit a FulfillmentWebLoc request to the retailer to request the download location information, and may receive a FulfillmentWebLoc response in response thereto.

Next, the first device D1 may transmit a file download initiation request to the second device D2 (step S67). The file download initiation request may include the acquired download location information, a content ID for identifying a content, a profile including definition information of a tile to be downloaded, an asset physical ID (APID), etc.

Upon receiving the file download initiation request, the second device D2 transmits a file download request to a download provider 30 to request to download the content on the basis of the download location information (step S68). Upon receiving the file download request, the download provider 30 transmits a right token validation request to a coordinator 52 to request to validate a right token (step S69). Herein, the right token validation may be for validating whether the user has a download right on the content.

The coordinator 52 confirms whether the user has the download right on the content through the right token validation. If it is confirmed that the user has the right, in response to the right token validation request, the coordinator 52 transmits a right token validation response to the download provider 30 to report that the requested download is authorized (step S70).

Upon receiving the right token validation response, the download provider 30 may transmit a file download response to the second device D2 to report that the content is downloaded (step S71), and may download the content to the second device D2 (step S72).

In this case, the download provider 30 may report a content download status to the second device D2. On the basis of this, the second device D2 may display the content download status. In addition, the second device D2 may transmit the content download status to the first device D1. Then, the first device D1 may also display the content download status.

Upon the completion of the content download, the second device D2 may transmit a file download confirm to the first device D1 to report the completion of the content download (step S73). On the basis of the received file download confirm, the first device D1 may display a message for indicating the completion of the content download to a screen.

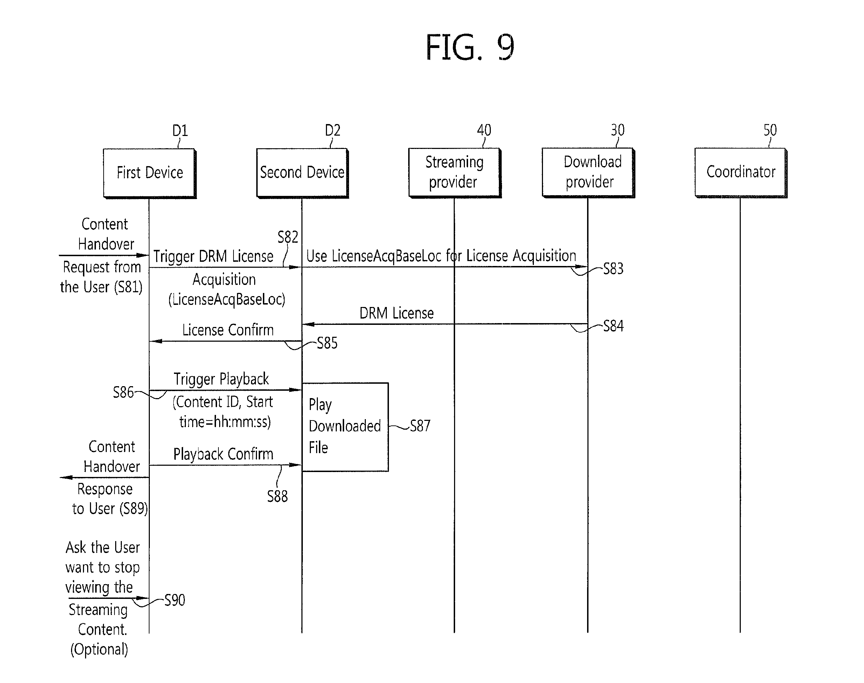

FIG. 9 is a flowchart showing an example of seamlessly playing back a content, which is played back in a streaming or downloading manner in a first device D1, in a second device D2 according to another embodiment of the present invention.

Referring to FIG. 9, the first device D1 plays back a content received in a streaming manner from a streaming provider 40 or plays back a content downloaded from a download provider 30.

In this case, if the user calls a handover menu by manipulating an input means such as a remote controller or the like and thereafter selects the second device D2 as a target device in order to resume the playback of a content currently watched through the first device D1 in the second device D2, the first device D1 may receive a request to hand over the content playback to the second device D2 (step S81).

In this case, if the user does not have the download right on the content (e.g., a right token associated with a user account does not have the download right), the first device D1 may transmit a trigger DRM license acquisition request to the second device D2 to request to acquire the DRM license (step S82). The trigger DRM license acquisition request may include DRM license acquisition information. The DRM license acquisition information may include a location for the DRM acquisition required in a service. The DRM license acquisition information is indicated by 'LicenseAcqBaseLoc' in the following drawings, including FIG. 9, which shows the DRM license acquisition information.

Upon receiving the trigger DRM license acquisition request, the second device D2 may access to the download provider 30 by using the DRM license acquisition information, and may request the DRM license (step S83). The download provider 30 may authenticate the second device D2 in response to the request, and may transmit the DRM license to the second device D2 (step S84). Upon receiving the DRM license, the second device D2 may transmit a license confirm to the first device D1 to report that the DRM license is acquired (step S85).

Upon receiving the license confirm, the first device D1 may transmit a trigger playback message to the second device D2 to request to play back the content starting from a designated time (step S86). The trigger playback message may include a content ID for identifying the content and play start time information. The playback start time information may imply information of a time at which a target device starts the playback of the content. For example, the playback start time information may include information of time/minute/second (HH:MM:SS) at which the playback starts.

Upon receiving the trigger playback message, the second device D2 may play back the content starting from the time corresponding to the playback start time information (step S87). The second device D2 may transmit a playback confirm to the first device D1 to report that the playback of the content starts (step S88). The first device D1 may output a content handover response to the user to report that the playback of the content is handed over on the basis of the received playback confirm (step S89).

Meanwhile, the first device D1 may automatically stop the playback of the content in response to the content handover, or may output a message for indicating whether to stop watching a content currently played back in the first device D1 (step S90).

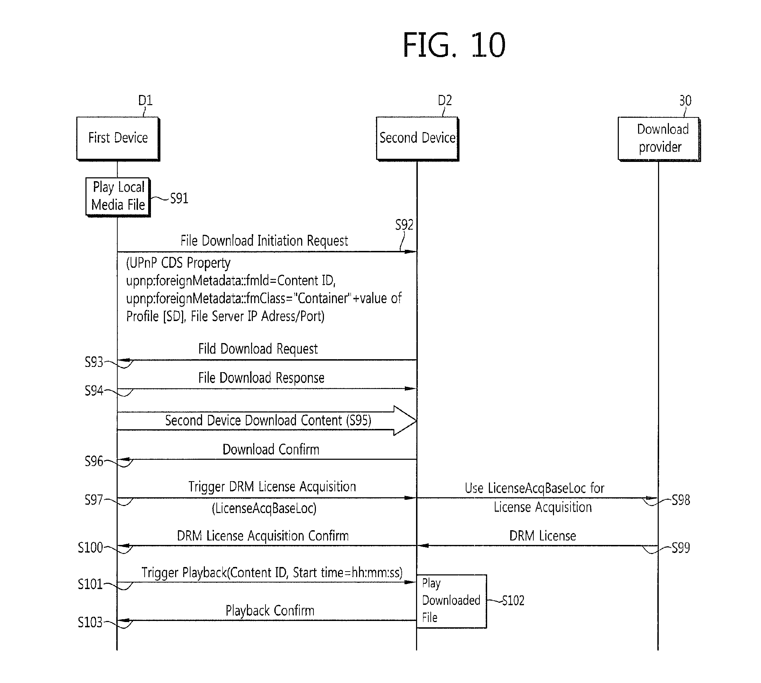

FIG. 10 is a flowchart showing an example of resuming a playback of a media file after transmitting the media file to a second device D2 while playing back the media file, i.e., a content stored in a first device D1, according to another embodiment of the present invention.

Referring to FIG. 10, the first device D1 stores a content, e.g., a media file, downloaded from a download provider 30. The first device D1 may play back the stored media file (step S91). In this case, a user may call a menu by manipulating an input means such as a remote controller or the like, and thereafter may select the second device D2 as a target device in order to resume a playback of a media watched through the first device D1 in the second device D2.

The first device D1 may transmit a file download initiation request to the second device D2 to request to initiate the download of the media file (step S92). The file download initiation request may include a content ID, container information for the file download, profile information, file server access information, etc. The file server access information may be an IP address or port information of a file server for example. Since a file download server which stores the media file is the first device D1 in the present embodiment, the file server access information may be an IP address or port information of the first device D1.

Upon receiving the download initiation request, the second device D2 may transmit a file download request to the first device D1, which is the download server, to request to download the file (step S93). In response to the file download request, the first device D1 may transmit a file download response to the second device D2 to report that the file download is authorized (step S94), and may download the stored media file to the second device D2 (step S95). Upon the completion of the download, the second device D2 reports to the first device D1 the completion of the download (step S96).

If the user does not have the download right on the content (e.g., a right token associated with a user account does not have the download right), the first device D1 may transmit a trigger DRM license acquisition request to the second device D2 to request to acquire the DRM license (step S97). The trigger DRM license acquisition request may include DRM license acquisition information, e.g., 'LicenseAcqBaseLoc'. The DRM license acquisition information may include a location for the DRM acquisition required in a service.

Upon receiving the trigger DRM license acquisition request, the second device D2 may access to the download provider 30 by using the DRM license acquisition information, and may request the DRM license (step S98). The download provider 30 may authenticate the second device D2 in response to the request, and may transmit the DRM license to the second device D2 (step S99). Upon receiving the DRM license, the second device D2 may transmit a DRM license acquisition confirm to the first device D1 to report that the DRM license is acquired (step S100).

Upon receiving the DRM license acquisition confirm, the first device D1 may transmit a trigger playback message to the second device D2 to request to play back the content starting from a designated time (step S101). The trigger playback message may include a content ID for identifying the content and play start time information. The playback start time information may imply information of a time at which a target device starts the playback of the content. For example, the playback start time information may include information of time/minute/second (HH:MM:SS) at which the playback starts.

Upon receiving the trigger playback message, the second device D2 may play back the content starting from the time corresponding to the playback start time information (step S102). The second device D2 may transmit a playback confirm to the first device D1 to report that the playback of the content starts (step S103).

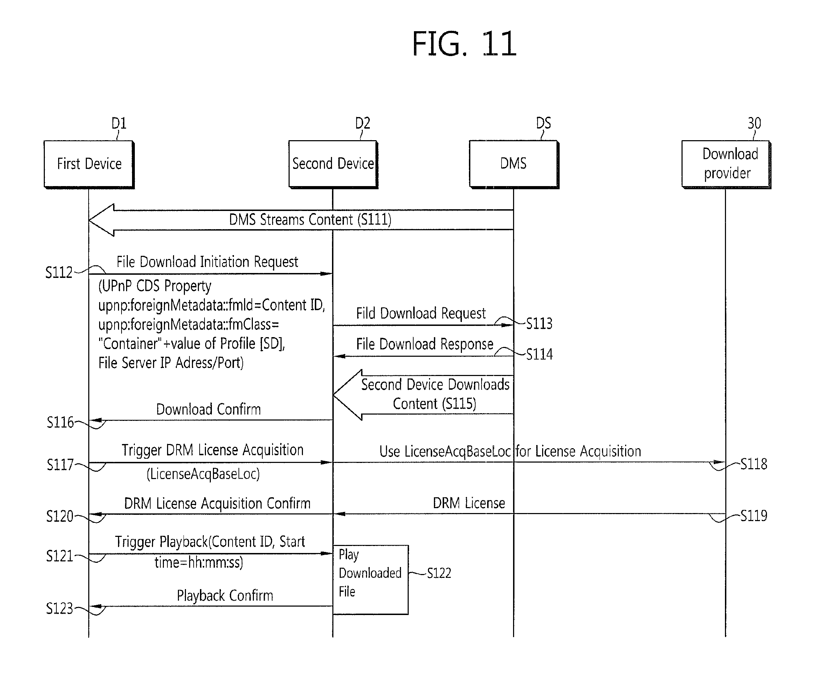

FIG. 11 is a flowchart showing an example of resuming a playback of a content played back by a first device D1 in a streaming manner from a DMS after downloading the content from the DMS to a second device D2 according to another embodiment of the present invention.

Referring to FIG. 11, the first device D1 plays back a content received from the DMS DS in the streaming manner (step S111). In this case, a user may call a download menu by manipulating an input means such as a remote controller or the like, and thereafter may select the second device D2 as a target device in order to resume a playback of a content watched through the first device D1 in the second device D2.

Accordingly, the first device D1 may transmit a file download initiation request to the second device D2 to request to initiate the download of the content (step S112). The file download initiation request may include a content ID, container information for the file download, profile information, file server access information, etc. The file server access information may be an IP address or port information of a file server for example. Since a file download server which stores the content is the DMS DS in the present embodiment, the file server access information may be an IP address or port information of the DMS DS.

Upon receiving the download initiation request, the second device D2 may transmit a file download request to the DMS DS, which is the download server, to request download the file (step S113). In response to the file download request, the DMS DS may transmit a file download response to the second device D2 to report that the file download is authorized (step S114), and may download the content to the second device D2 (step S115). Upon the completion of the download, the second device D2 reports to the first device D1 that the download is complete (step S116).

If the user does not have the download right on the content, the first device D1 may transmit a trigger DRM license acquisition request to the second device D2 to request to acquire the DRM license (step S117). The trigger DRM license acquisition request may include DRM license acquisition information, e.g., 'LicenseAcqBaseLoc'. The DRM license acquisition information may include a location for the DRM acquisition required in a service.

Upon receiving the trigger DRM license acquisition request, the second device D2 may access to a download provider 30 by using the DRM license acquisition information, and may request the DRM license (step S118). The download provider 30 may authenticate the second device D2 in response to the request, and may transmit the DRM license to the second device D2 (step S119). Upon receiving the DRM license, the second device D2 may transmit a DRM license acquisition confirm to the first device D1 to report that the DRM license is complete (step S120).

Upon receiving the DRM license acquisition confirm, the first device D1 may transmit a trigger playback message to the second device D2 to request to play back the content starting from a designated time (step S121). The trigger playback message includes a content ID for identifying the content and play start time information. For example, the playback start time information may include information of time/minute/second (HH:MM:SS) at which the playback starts.

Upon receiving the trigger playback message, the second device D2 may play back the content starting from the time corresponding to the playback start time information (step S122). The second device D2 may transmit a playback confirm to the first device D1 to report that the playback of the content starts (step S123).

Meanwhile, the aforementioned embodiments describe a case where a first device through which a viewer currently watches a content is a requesting device which requests content streaming or download handover, and a second device for which content streaming or download handover is achieved is a target device. However, the present invention is not limited thereto, and thus a request of the content handover may be initiated not only by the first device through which the viewer is watching the content but also by the second device which is a target device for seamlessly playing back the content according to the handover.

In other words, if a playback of a content based on downloading or streaming before handover is called a primary playback, a playback of a content based on downloading or streaming after handover is called a secondary playback, a device which performs the primary playback is called a primary device, and a device which performs the secondary playback is called a secondary device, then the first device may be called the primary device and the second device may be called the secondary device in the aforementioned embodiments.

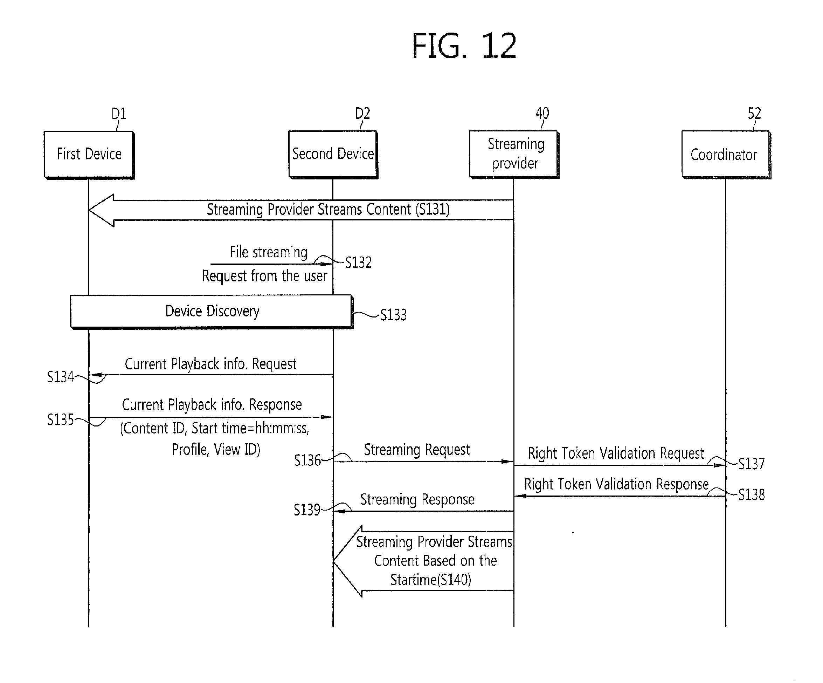

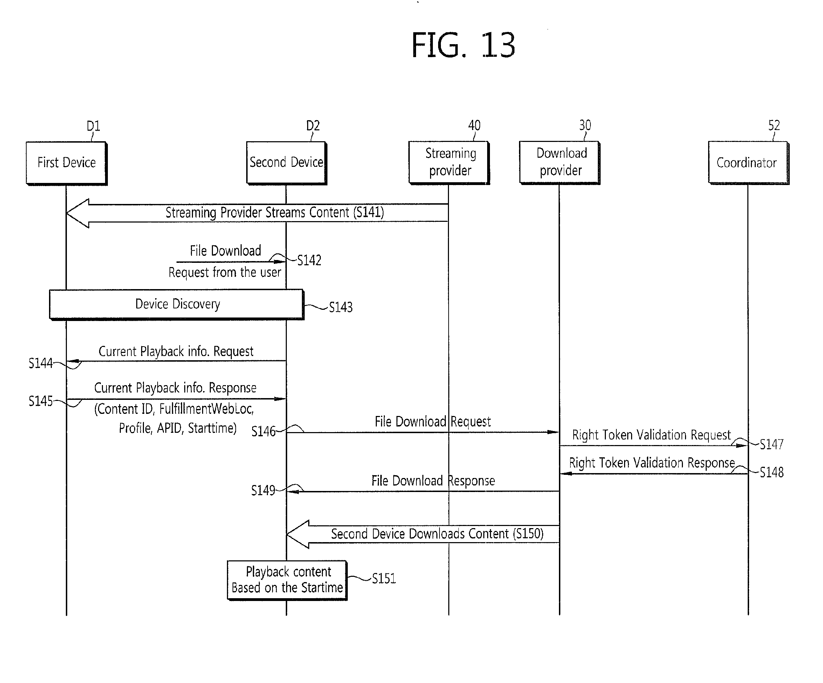

It is described in the aforementioned embodiments that the primary device is a requesting device and the secondary device is a target device. However, in embodiments described below with reference to FIG. 12 and FIG. 13, the secondary device may be both a target device and a requesting device which actively requests handover. That is, a seamless playback interface according to the present invention allows the secondary device to retrieve properties and a status of a content object which is currently played back or streamed in the primary device.

Hereinafter, such embodiments will be described.

FIG. 12 is a flowchart showing an example of seamlessly playing back a content, which is watched in a first device in a streaming manner, in a second device in a streaming manner at the request of the second device according to another embodiment of the present invention.

Referring to FIG. 12, the first device D1 may play back a content received from a streaming provider 40 in a streaming manner (step S131). In this case, in order to seamlessly watch the content, which is watched through the first device D1, in the second device D2 in the streaming manner, a user calls a streaming menu provided in the second device and thereafter requests a seamless playback through a streaming handover from the first device D1 to the second device D2 (step S132).

Upon receiving the request, the second device D2 may perform a device discovery according to a procedure determined to discover the first device D1 (step S133). When the device discovery is performed, the second device D2 may exchange a discovery request and response message with respect to the first device D1. In addition, the second device D2 may store in advance a list of recently accessed devices and use it when the device discovery is performed.

Upon the discovery of the first device D1, the second device D2 may transmit a current playback information request to the first device D1 to request playback information related to a content currently played back (step S134). The current playback information request may include information for requesting a property set of an asset currently played back in the first device. In addition, the current playback information request may include information indicating that a content is to be provided to the second device D2 in a streaming manner.

In response thereto, the first device D1 transmits a current playback information response (step S135). The current playback information response may include requested properties, e.g., a content ID, a profile, a view ID, playback start time information, an asset physical ID, etc. The playback start time information may imply information of a time at which a target device starts the playback of the content. For example, the playback start time information may include information of time/minute/second (HH:MM:SS) at which the playback starts.

Meanwhile, when transmitting a message for discovering the first device D1, the second device D2 may insert request information for requesting a property of an asset currently played back, and may acquire current playback information of the first device D1 in response thereto.

Upon receiving the current playback information response, the second device D2 transmits a streaming request to the streaming provider 40 to stream the content starting from a time corresponding to the playback start time information (step S136).

Upon receiving the streaming request, the streaming provider 40 transmits a right token validation request to the coordinator 52 to request to validate a right token of the user (step S137). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the streaming provider 40 to report that the requested streaming is authorized (step S138).

Upon receiving the right token validation response, the streaming provider 40 may transmit a streaming response to the second device D2 to report that the content is streamed starting from the playback start time (step S139), and may stream the content to the second device D2 starting from the playback start time (step S140).

FIG. 13 is a flowchart showing an example of seamlessly playing back a content, which is watched in a first device D1 in a downloading manner, in a second device D2 in a streaming manner at the request of the second device D2 according to another embodiment of the present invention.

Referring to FIG. 13, the first device D1 may play back a content received from a streaming provider 40 in a streaming manner (step S141). In this case, in order to watch the content, which is watched through the first device D1, in the second device D2 in the downloading manner, a user may call a download menu provided in the second device and thereafter may request a seamless playback through the downloading (step S142).

Upon receiving the request, the second device D2 may perform a device discovery according to a procedure determined to discover the first device D1 (step S143). When the device discovery is performed, the second device D2 may exchange a discovery request and response message with respect to the first device D1. In addition, the second device may store in advance a list of recently accessed devices and use it when the device discovery is performed.

Upon the discovery of the first device D1, the second device D2 may transmit a current playback information request to the first device D1 to request playback information related to a content currently played back (step S144). The current playback information request may include information for requesting a property set of an asset currently played back in the first device. In addition, the current playback information request may include information indicating that a content is to be provided to the second device D2 in the downloading manner.

In response thereto, the first device transmits a current playback information response (step S145). The current playback information response may include a content ID, download location information, a profile, playback start time information, an asset physical ID, etc. The playback start time information is information of a time at which a target device starts the playback of the content. For example, the playback start time information may include information of time/minute/second (HH:MM:SS) at which the playback starts.

Meanwhile, when transmitting a message for discovering the first device D1, the second device D2 may insert request information for requesting a property of an asset currently played back, and may acquire current playback information of the first device D1 in response thereto.

Upon receiving the current playback information response, the second device D2 transmits a file download request to a download provider 30 to request to download the content (step S146).

Upon receiving the file download request, the download provider 30 transmits a right token validation request to a coordinator 52 to request to validate a right token of the user (step S147). Herein, the right token validation may be for validating whether the user has a download right on the content.

The coordinator 52 confirms whether the user has the download right on the content through the right token validation. If it is confirmed that the user has the right, in response to the right token validation request, the coordinator 52 transmits a right token validation response to the download provider 30 to report that the requested download is authorized (step S148).

Upon receiving the right token validation response, the download provider 30 may transmit a file download response to the second device D2 to report that the content is downloaded (step S149), and may download the content to the second device D2 (step S150). Upon the downloading of the content, the second device D2 may play back the content starting from the playback start time (step S151).

Meanwhile, as described above with reference to FIG. 2, the access portal 60 may be a device proxy server which allows the device 100 to interwork with entities of a server domain so that an open content market service can be provided to the device 100 of a user domain.

Hereinafter, examples of seamlessly playing back a content between devices through a content streaming handover on the basis of the access portal 60 will be described.

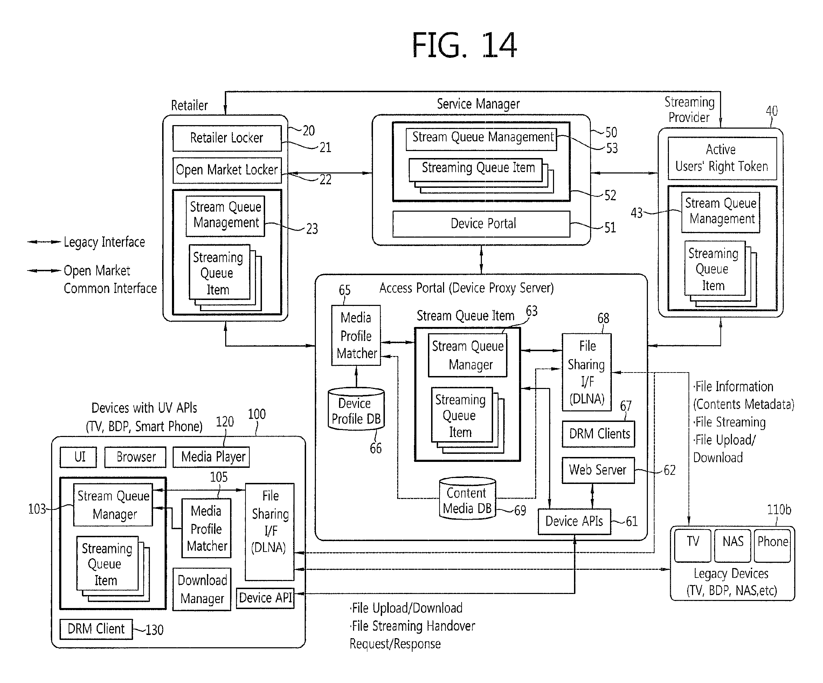

FIG. 14 is a block diagram showing a basic structure of the open content market service system 1 from the viewpoint of performing a content streaming handover between devices through streaming, as an example of involving the access portal 60.

Referring to FIG. 14, the access portal 60 communicates with a service manager 50, a retailer 20, a streaming provider 40, etc., in one hand, and communicates with a legacy device 110b or a service available device 100 provided in a user domain in another hand.

Herein, the service available device 100 is a device compatible with the open content market service, and may be a device having modules (e.g., applications, etc.) required in the service. The legacy device 110b may be a device not compatible with the open content market service. The service available devices 100 and the legacy devices 110b may interwork with each other through DLNA, UPnP, etc.

The retailer 20 may include a retailer locker 21 for managing an account or the like for a retail service, an open content market locker 22 for managing an account or the like for the open content market service, and a stream queue management function 23 for managing a streaming queue item. The service manager 50 may include a REST-based client device portal 51, a stream queue management function 53 for managing a streaming queue item, etc. The streaming provider 40 may also include a stream queue management function 43 or the like for managing a streaming queue item.

In a user domain, the device 100 capable of providing the open content market service may include a DRM client 130 for enforcing a usage rule according to a DRM license or policy and for decoding a media file by using a keyset of the DRM license, a player 120 for currently playing back a content by decoding a media file, a stream queue manager 103 for managing a streaming queue item, a media profile matcher 105 for managing an appropriate profile for a target device which receives a stream of the stream queue item, etc.

The access portal 60 includes a structure of a device proxy service in order to allow the device 100 or the legacy device 110 to interwork with server-domain entities such as the service manager 50, etc. For example, the access portal 60 may include a device API 61 for an access device, a web server 62 for providing a web service, a stream queue manager 63 for managing a streaming queue item, a media profile matcher 65, a device profile database 66, a DRM client 67, a file sharing interface 68, a content media database 69, etc.

As described above, the retailer 20, the service manager 50, the streaming provider 40, the device 100, and the access portal 60 may respectively include stream queue mangers 23, 53, 43, 103, and 63 for managing streaming queue items. That is, the streaming queue item may also be managed by the access portal 60 to support a content streaming handover.

The streaming queue item may imply information of a streaming content to be transmitted from the streaming provider 40 to the devices 100 and 110. The streaming queue item may be embedded in a streaming handover request for requesting a streaming handover between the devices and a streaming handover response which is a response of the streaming handover request.

The streaming queue item is managed by each of the stream queue managers 23, 53, 43, 103, and 63. The stream queue managers 23, 53, 43, 103, and 63 may imply software or hardware for managing a stream queue consisting of streaming queue items for streaming handover and available queued streams per device.

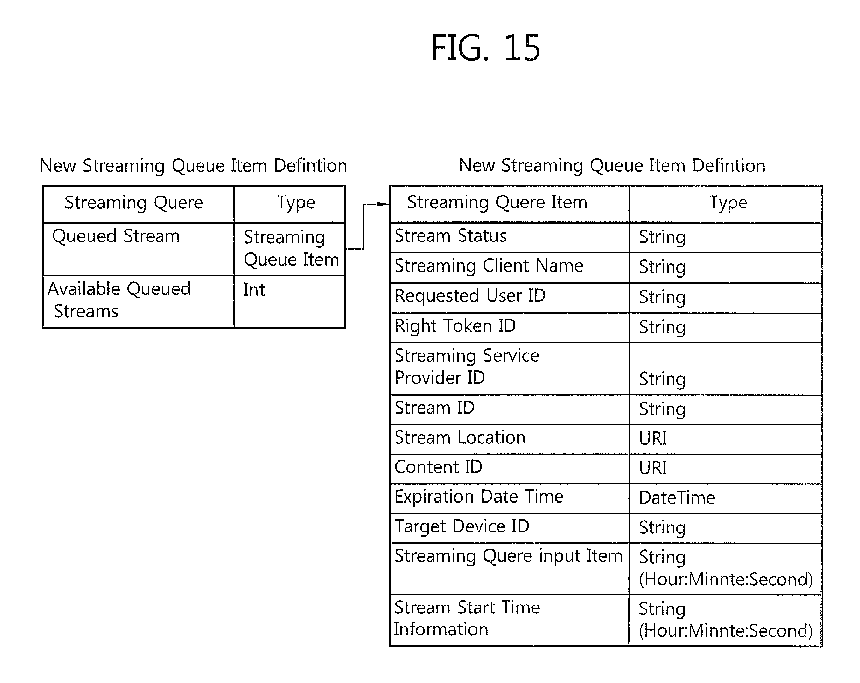

FIG. 15 shows a table for describing a field structure of a stream queue and a streaming queue item according to the present invention.

Referring to FIG. 15, the stream queue may include a 'queued stream' to which at least one streaming queue item is inserted and 'available queued streams' indicating an available queued stream per device. The 'available queued streams' may be information indicating a capacity of remaining stream queues allocated to the device, that is, information indicating a capacity of an available stream queue.

The streaming queue item may include 'Stream Status' indicating a status of a stream, 'Stream Client Name' indicating a name of a stream client, 'Requested User ID' indicating identification information of a requested user, 'Right Token ID' indicating identification information of a right token, 'Streaming Service Provider ID' indicating identification information of a streaming provider, 'Stream ID' indicating identification information of a stream, 'Stream Location' indicating a URI or URL for example, 'Content ID' indicating identification information of a content, 'Expiration Date Time' indicating a right expiration time, 'Target Device ID' indicating identification information of a target device, 'Stream Queue Input Time' indicating an input time of a stream queue, 'Steam Start Time Information' indicating stream start time information, etc.

When the handover is performed between devices through streaming, the 'Target Device ID' may be used as information for identifying a target device for content streaming handover, and the 'Steam Start Time Information' may be used as information for resuming a playback of a content in the second device D2 from a part at which the content is finally watched by a user in the first device D1, when a content streaming handover is performed from the first device D1 to the target device, i.e., the second device D2. That is, the 'Steam Start Time Information' may be utilized to enable a seamless content playback when the content streaming handover is performed between the devices.

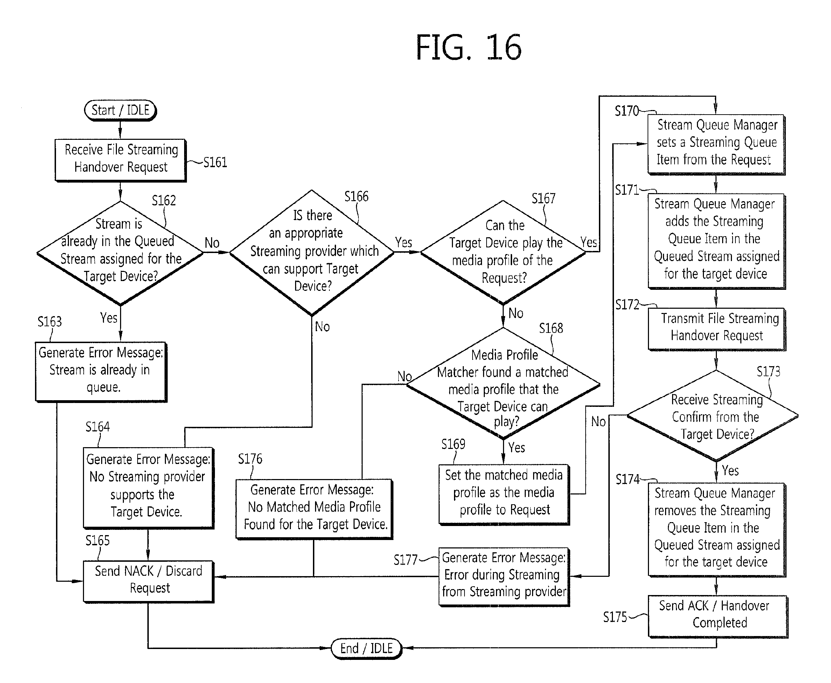

FIG. 16 is a flowchart for describing an operational flow of a stream queue manager according to the present invention. The stream queue manager 63 included in the access portal 60 or the stream queue managers 103 included in the respective devices 100 of a user domain may perform a stream queue management of FIG. 16. In addition, the queue management may also be performed equally or similarly in the coordinator 52, the retailer 20, or the stream queue management functions 53, 23, and 43 of the streaming provider 40.

As shown in FIG. 16, the stream queue manager may receive from a specific device a file streaming handover request for requesting a file streaming handover to a target device (step S161).

Upon receiving the streaming handover request, the stream queue manager may determine whether a queued stream designated for the target device is already in a stream queue (step S162). This may be a process for avoiding handling of an overlapping request. In this case, if the queued stream designated for the target device is already in the stream queue, the stream queue manager generates a corresponding error message (step S163), and sends a negative ACKnowledge (NACK) message including the generated error message to the device and discards the request (step S165).

If the queued stream designed for the target device is not already in the stream queue, the stream queue manager may determine whether there is a streaming provider capable of supporting the target device (step S166). In this case, if there is no streaming provider capable of supporting the target device, the stream queue manager generates a corresponding error message (step S164), and sends a NACK message including the generated error message and discards the request (step S165).

In the presence of the streaming provider capable of supporting the device, the stream queue manager may determine whether the target device can play back a media profile requested by the file streaming handover request (step S167). That is, the stream queue manager determines whether the target device has capability for playing back the requested media profile in step S167.

In this case, if the requested media profile cannot be played back by the target device, the stream queue manager searches for a matched media profile which is a medial profile that can be played back by the target device (step S168). Herein, if the matched media profile cannot be found, the stream queue manager generates a corresponding error message (step S176), and sends a NACK message including the generated error message to the device and discards the request (step S165). Meanwhile, if the matched media profile is found, the stream queue manager may set a media profile of the file streaming handover request as the matched media profile (step S169).

If it is determined the media profile of the file streaming handover request can be played back by the target device in step S167 or if the media profile of the file streaming handover request is set as the matched media profile in step S169, the stream queue manager may set a streaming queue item from the file streaming handover request (step S170).

Next, the stream queue manager adds the set streaming queue item to a queued stream assigned for the target device (step S171). The stream queue manager may transmit a file streaming handover request corresponding to the streaming queue item to any one of a target device, a streaming provider, a retailer, and a coordinator (step S172).

Meanwhile, the stream queue manager may receive a streaming confirm from the target device within a determined time. If the streaming confirm is not received within the determined time, the stream queue manager generates a corresponding error message (step S177), and sends a NACK message including the generated error message to the device and discards the request (step S165).

Upon receiving the streaming conform, the stream queue manager may delete the streaming queue item from the queue stream assigned for the target device, and may send to a device which requests a streaming handover an ACK message for reporting the completion of the handover (step S175).

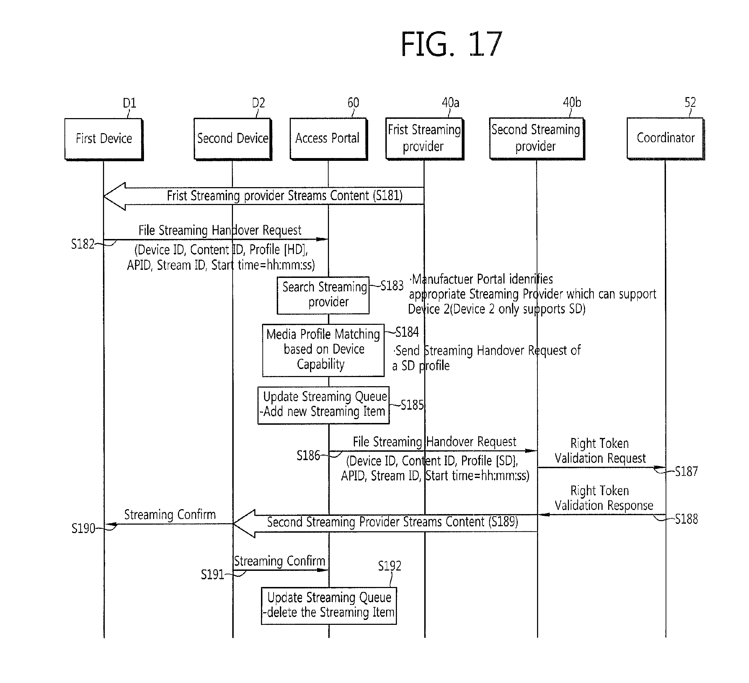

FIG. 17 is a flowchart showing an example in which an access portal 60 identifies a new streaming provider supporting a target device, i.e., a second device D2, when a content streaming handover is performed according to another embodiment of the present invention.

Referring to FIG. 17, a first streaming provider 40a streams a content to a first device D1 (step S181). A user watches the content played back in the first device D1. In this case, if the user calls a streaming handover menu by manipulating an input means such as a remote controller or the like and thereafter selects the second device D2 as a target device in order to seamlessly watch a content currently watched through the first device D1 in the second device D2, the first device D1 transmits a file streaming handover request to the access portal to request a streaming handover of a content file (step S182).

The file streaming handover request may include a device ID, a content ID, a profile, an asset physical ID, a stream ID, playback start time information, etc. The device ID may imply a target device ID. Since the target device is the second device D2 in the present embodiment, the target device ID may be information capable of identifying the second device D2. The profile is a media profile designated by the first device D1. It is assumed that the profile is set to 'HD' in the present embodiment. The playback start time information may be information of a time at which a target device starts the playback of the content. For example, it indicates from which part the playback starts in a full content playback duration.

Upon receiving the file streaming handover request, the access portal 60 searches for a streaming provider capable of supporting the target device, i.e., the second device D2 (step S183). It is assumed that a second streaming provider 40b supports the streaming to the second device D2 in the present embodiment. Therefore, the second streaming provider 40b is found as the streaming provider capable of supporting the second device D2.

In addition, the access portal 60 may perform media profile matching on the basis of device capability of the target device, i.e., the second device D2 (step S184). In step S184, the access portal 60 determines whether a profile included in the file streaming handover request is a profile that can be played back in the second device D2.

In this case, if the profile cannot be played back in the second device D2, the access portal 60 may search for a profile that can be played back in the second device D2 and then set a profile of a file streaming handover request. For example, if the second device D2 cannot play back HD-level media and can play back SD-level media, the access portal 60 may modify the profile of the file streaming handover request from 'HD' to 'SD'.

Next, the access portal 60 adds a new streaming queue item to a stream queue assigned to the second device D2 on the basis of the modified file streaming handover request (step S185). Subsequently, the access portal 60 transmits a file streaming handover request to the second streaming provider 40b on the basis of the added streaming queue item (step S186). The transmitted file streaming handover request may include a device ID, a content ID, an asset physical ID, a streaming ID, playback time start information, etc. Herein, the profile is modified to 'SD' by the access portal.

Upon receiving the file streaming handover request, the second streaming provider 40b transmits a right token validation request to a coordinator 52 to request to validate a right token of the user (step S187). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the second streaming provider 40b to report that the requested streaming is authorized (step S188).

Upon receiving the right token validation response, the second streaming provider 40b may stream the content to the second device D2 (step S189). In this case, the second streaming provider 40b may stream the content starting from a time designated by playback start time information.

In this case, the second device 40b transmits to each of the first device D1 and the access portal 60 a streaming confirm indicating that a requested streaming handover is correctly performed (steps S190 and S191). Upon receiving the streaming confirm, the access portal 60 deletes the streaming queue item from a stream queue, assigned to the second device, of the access portal 60 (step S192).

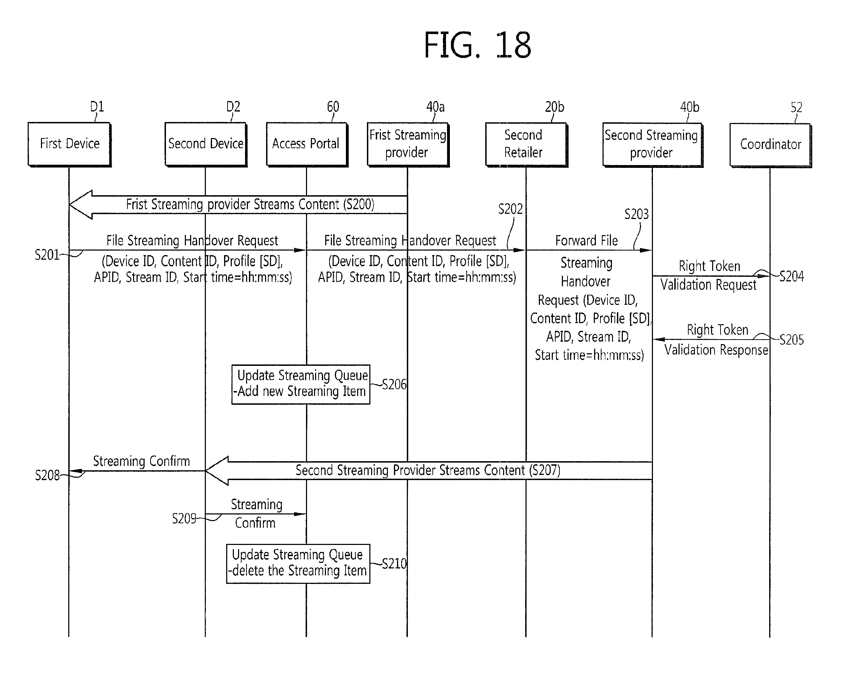

FIG. 18 is a flowchart showing an example in which an access portal identifies a new second retailer 20b when a content streaming handover is performed, and sends to the second retailer 20b a request for a new streaming provider supporting a target device, i.e., a second device D2, according to another embodiment of the present invention.

Referring to FIG. 18, a first streaming provider 40a streams a content to a first device D1 (step S200). A user watches the content played back in the first device D1. The content may be purchased from a first retailer.

In this case, if the user calls a streaming handover menu by manipulating an input means such as a remote controller or the like and thereafter selects the second device D2 as a target device in order to seamlessly watch a content currently watched through the first device D1 in the second device D2, the first device D1 transmits a file streaming handover request to an access portal 60 to request a streaming handover of a content file (step S201).

The file streaming handover request may include a device ID, a content ID, a profile, an asset physical ID, a stream ID, playback start time information, etc. The device ID may imply a target device ID. Since the target device is the second device D2 in the present embodiment, the target device ID may be information capable of identifying the second device D2. The profile is a media profile designated by the first device D1. It is assumed that the profile is set to 'SD' in the present embodiment. The playback start time information may be information of a time at which a target device starts the playback of the content.

Upon receiving the file streaming handover request, the access portal 60 identifies the second retailer 20b and transmits to the second retailer 20b a file streaming handover request corresponding to the received file streaming handover request (step S202). In addition, the access portal 60 adds a new streaming queue item to a stream queue assigned to the second device D2 on the basis of the received file streaming request (step S206).

The second retailer 20b forwards to a second streaming provider 40b the file streaming request received from the access portal 60 (step S203). The forwarded file streaming handover request may include a device ID, a content ID, a profile, an asset physical ID, a stream ID, playback start time information, etc.

Upon receiving the file streaming handover request forwarded from the second retailer 20b, the second streaming provider 40b transmits a right token validation request to a coordinator 52 to request to validate a right token of the user (step S204). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the second streaming provider 40b to report that the requested streaming is authorized (step S205).

Upon receiving the right token validation response, the second streaming provider 40b may stream the content to the second device D2 (step S207). In this case, the second streaming provider may stream the content starting from a time designated by playback start time information. Therefore, a viewer can watch the content starting from a time at which the content streaming is handed over.

The second device D2 transmits to each of the first device D1 and the access portal 60 a streaming confirm indicating that a requested streaming handover is correctly performed (steps S208 and S209). Upon receiving the streaming confirm, the access portal 60 deletes the streaming queue item from its stream queue assigned to the second device (step S210).

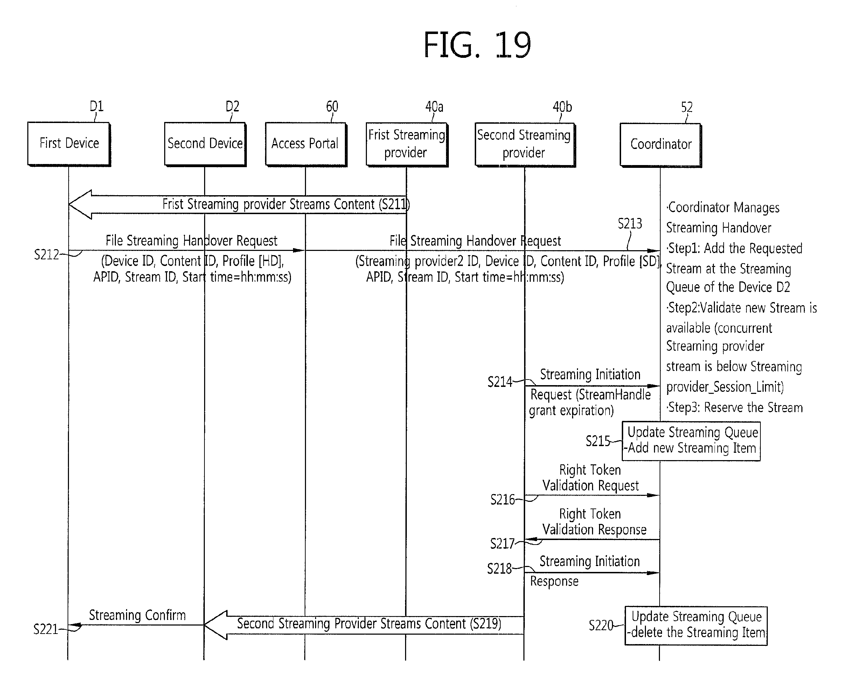

FIG. 19 is a flowchart showing an example of performing a content streaming handover under the control of a coordinator 52 according to another embodiment of the present invention.

Referring to FIG. 19, a first streaming provider 40a streams a content to a first device D1 (step S211). A user watches the content played back in the first device D1.

In this case, if the user calls a streaming handover menu by manipulating an input means such as a remote controller or the like and thereafter selects a second device D2 as a target device in order to seamlessly watch a content currently watched through the first device D1 in the second device D2, the first device D1 transmits a file streaming handover request to an access portal 60 to request a streaming handover of a content file (step S212).

The file streaming handover request may include a device ID, a content ID, a profile, an asset physical ID, a stream ID, playback start time information, etc. The device ID may imply a target device ID. Since the target device is the second device in the present embodiment, the target device ID may be information capable of identifying the second device. The profile may imply definition information of a playback content designated by the first device. The playback start time information may be information of a time at which a target device starts the playback of the content. For example, it indicates from which part the playback starts in a full content playback duration.

The access portal 60 transmits to the coordinator 52 a file streaming handover request corresponding to the received file streaming handover request (step S213). The file streaming handover request transmitted to the coordinator 52 may include a streaming provider ID, a device ID, a content ID, a profile, an asset physical ID, a stream ID, playback start time information, etc.

The streaming provider ID may be an ID of a second streaming provider 40b supporting the second device D2. That is, the file streaming handover request transmitted from the coordinator 52 may include information indicating that the content corresponding to the content ID is to be streamed from the second streaming provider 40b to the second device D2. For this, as described above in step S183, the access portal 60 may search for a streaming provider capable of supporting a target device and may generate the streaming provider ID according to the search result. In addition, the access portal 60 may set the profile as described above in step S184.

Upon receiving the file streaming handover request from the access portal 60, the coordinator 52 adds a requested new stream to a stream queue assigned to the second device D2. In addition, the coordinator 52 may determine whether the stream is valid, and then may reserve the stream. The coordinator 52 updates the stream queue by adding the new streaming queue item to the stream queue assigned to the second device D2 (step S215).

The coordinator 52 may transmit a streaming initiation request to the second streaming provider 40b (step S214). If the profile is not set in the access portal 60, the coordinator 52 may request the second streaming provider 40b to stream the content by using the profile that can be played back in the second device D2 in consideration of a capability of the second device D2.

Upon receiving the streaming initiation request, the second streaming provider 40b transmits a right token validation request to the coordinator 52 to request to validate a right token of the user (step S216). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the second streaming provider 40b to report that the requested streaming is authorized (step S217).

Upon receiving the right token validation response, the second streaming provider 40b transmits a streaming initiation response to the coordinator 52 (step S218). Upon receiving the streaming initiation response, the access portal 60 deletes the streaming queue item from a stream queue assigned to the second device D2 (step S220).

The second streaming provider 40b may stream the content to the second device D2 (step S219). In this case, the second streaming provider 40b may stream the content starting from a time designated by playback start time information. The second device D2 transmits to the first device D1 a streaming confirm indicating that a requested streaming handover is correctly performed (step S221).

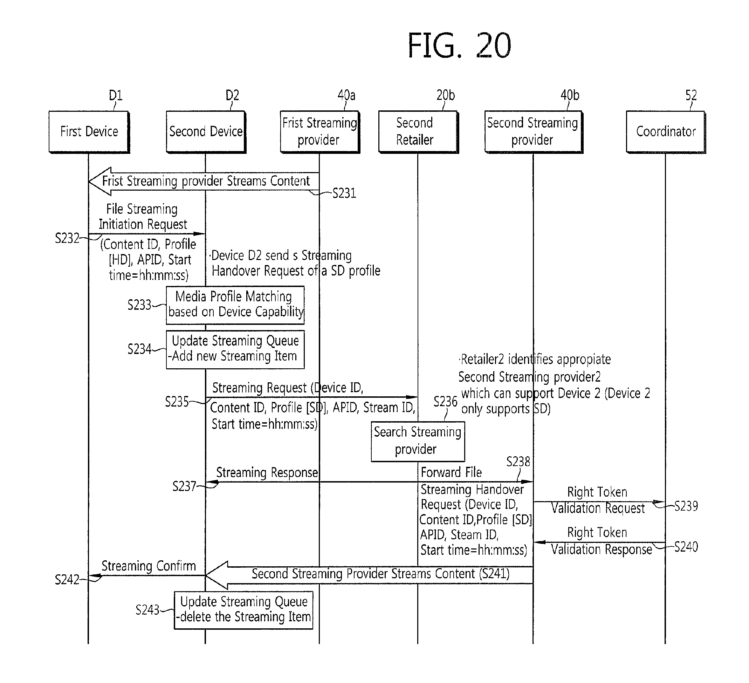

FIG. 20 is a flowchart showing an example in which a second retailer 20b identifies a second streaming provider 40b when a content streaming handover is performed, and sends a new streaming request to the second streaming provider 40b according to another embodiment of the present invention.

Referring to FIG. 20, a first streaming provider 40a streams a content to a first device D1 (step S231). A user watches the content played back in the first device D1. The content may be purchased from a first retailer (not shown).

In this case, if the user calls a streaming handover menu by manipulating an input means such as a remote controller or the like and thereafter selects a second device D2 as a target device in order to seamlessly watch a content currently watched through the first device D1 in the second device D2, the first device D1 transmits a file streaming handover request to the second device D2 to request a streaming handover of a content file (step S232).

The file streaming handover request may include a content ID, a profile, an asset physical ID, playback start time information, etc. The profile is a media profile designated by the first device D1. It is assumed that the profile is set to 'HD' in the present embodiment. The playback start time information may be information of a time at which a target device starts the playback of the content.

Upon receiving the file streaming handover request, the second device D2 may perform media profile matching on the basis of a capability of a target device, i.e., its device capability (step S233). In step S233, the second device D2 determines whether a profile included in the file streaming handover request is a profile that can be played back in the second device D2.

In this case, if the profile of the file streaming handover request cannot be played back in the second device D2, the second device D2 searches for a profile that can be played back in the second device D2 and then sets the profile of the file streaming handover request. For example, if the second device D2 cannot play back HD-level media and can play back SD-level media, the second device may modify the profile of the file streaming handover request from 'HD' to 'SD'.

Next, the second device D2 adds a new streaming queue item to a stream queue assigned to the second device D2 on the basis of the modified file streaming handover request (step S234).

Subsequently, the second device D2 transmits a streaming request to the second retailer 20b to request content streaming on the basis of the added streaming queue item (step S235). The transmitted file streaming handover request may include a device ID, a content ID, an asset physical ID, a streaming ID, playback time start information, etc. Herein, the device ID may be identification information of the second device D2, that is, a target device for playing back the streaming content. The profile is modified to 'SD' by the second device.

Upon receiving the streaming request, the second retailer 20b searches for a streaming provider capable of supporting the target device, i.e., the second device D2 (step S236). It is assumed in the present embodiment that the second streaming provider 40b is capable of supporting the streaming to the second device. Therefore, the second streaming provider 40b is found as the streaming provider capable of supporting the second device D2.

The second retailer 20b forwards a streaming request to the second streaming provider 40b (step S238), and on the other hand, transmits a streaming response to the second device D2 (step S237). The streaming request transmitted to the second streaming provider 40b may include a device ID, a content ID, an asset physical ID, a streaming ID, playback time start information, etc.

Upon receiving the streaming request, the second streaming provider 40b transmits a right token validation request to a coordinator 52 to request to validate a right token of the user (step S239). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the second streaming provider 40b to report that the requested streaming is authorized (step S240).

Upon receiving the right token validation response, the second streaming provider 40b may stream the content to the second device D2 (step S241). In this case, the second streaming provider 40b may stream the content starting from a time designated by playback start time information.

The second device D2 transmits to the first device D1 a streaming confirm indicating that the requested streaming handover is correctly performed (step S242). The streaming confirm transmitted to the first device D1 may indicate a streaming status. In addition, the second device D2 deletes the streaming queue item from a stream queue assigned to the second device D2 (step S243).

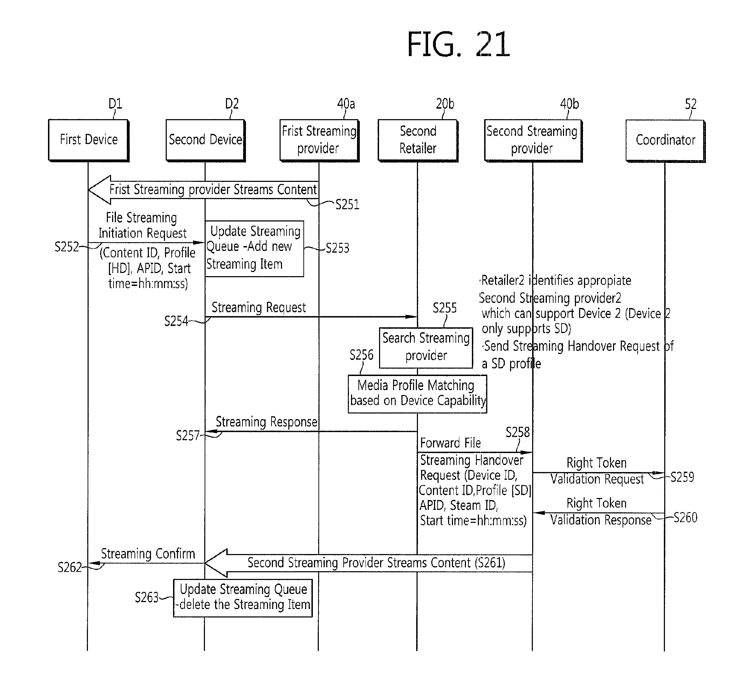

FIG. 21 is a flowchart showing an example in which a second retailer 20b identifies a second streaming provider 40b when a content streaming handover is performed, and performs profile matching according to another embodiment of the present invention.

Referring to FIG. 21, a first streaming provider 40a streams a content to a first device D1 (step S251). A user may watch the content played back in the first device D1.

In this case, if the user calls a streaming handover menu by manipulating an input means such as a remote controller or the like and thereafter selects a second device D2 as a target device in order to seamlessly watch a content currently watched through the first device D1 in the second device D2, the first device D1 transmits a file streaming handover request to the second device D2 to request a streaming handover of a content file (step S252).

The file streaming handover request may include a content ID, a profile, an asset physical ID, playback start time information, etc. The profile is a media profile designated by the first device. It is assumed that the profile is set to 'HD' in the present embodiment. The playback start time information may be information of a time at which a target device starts the playback of the content.

Upon receiving the file streaming handover request, the second device D2 adds a new streaming queue item to a stream queue assigned to the second device D2 on the basis of the received file streaming handover request (step S253). Subsequently, the second device D2 transmits a streaming request to the second retailer 20b to request content streaming on the basis of the added streaming queue item (step S254).

Upon receiving the streaming request from the second device D2, the second retailer 20b searches for a streaming provider capable of supporting the target device, i.e., the second device D2 (step S255). It is assumed in the present embodiment that the second streaming provider 40b is capable of supporting the streaming to the second device D2. Therefore, the second streaming provider 40b is found as the streaming provider capable of supporting the second device.

The second retailer 20b may perform media profile matching on the basis of a capability of the second device D2 (step S256). In step S256, the second retailer 20b determines whether a profile included in the streaming request can be played back in the second device D2.

In this case, if the profile cannot be played back in the second device D2, the second retailer 20b searches for a profile that can be played back in the second device D2 and then sets the profile of the streaming request. For example, if the second device D2 cannot play back HD-level media and can play back SD-level media, the second device D2 may modify the profile of the file streaming handover request from 'HD' to 'SD'.

Subsequently, the second retailer 20b transmits a streaming request to the second streaming provider 20b to request content streaming (step S258). The transmitted streaming request includes a device ID, a content ID, a profile, an asset physical ID, a stream ID, playback start time information, etc. The device ID may be identification information of the second device D2 for playing back the streaming content. The profile is modified to 'SD' by the second retailer 20b. In addition, the second retailer 20b transmits a streaming response to the second device on the other hand (step S257).

Upon receiving the streaming request, the second streaming provider 40b transmits a right token validation request to a coordinator 52 to request to validate a right token of the user (step S259). Herein, the right token validation may be for validating whether the user has a streaming right on the content.

The coordinator 52 confirms whether the user has the streaming right on the content through the right token validation. If it is confirmed that the user has the right, in response to the right token validation request , the coordinator 52 transmits a right token validation response to the second streaming provider 40b to report that the requested streaming is authorized (step S260).

Upon receiving the right token validation response, the second streaming provider 40b may stream the content to the second device D2 (step S261). In this case, the second streaming provider may stream the content starting from a time designated by playback start time information.

The second device D2 transmits to the first device D1 a streaming confirm indicating that the requested streaming handover is correctly performed (step S262). The streaming confirm transmitted to the first device D1 may indicate a streaming status. In addition, the second device D2 deletes the streaming queue item from a stream queue assigned to the second device D2 (step S263).

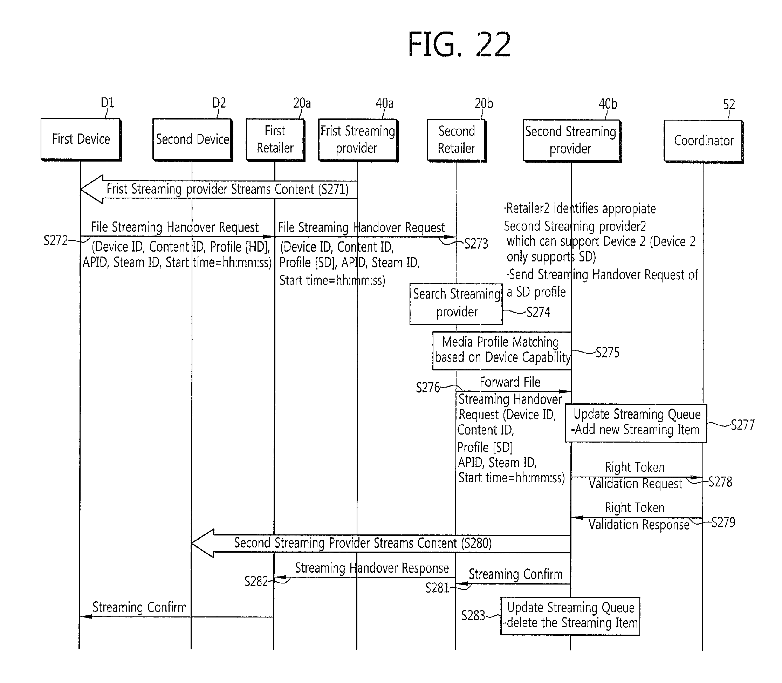

FIG. 22 is a flowchart showing an example in which a second streaming provider 40b manages a stream queue when a content streaming handover is performed according to another embodiment of the present invention.

Referring to FIG. 22, a first streaming provider 40a streams a content to a first device D1 (step S271). A user may watch the content played back in the first device D1.

In this case, if the user calls a streaming handover menu by manipulating an input means such as a remote controller or the like and thereafter selects a second device D2 as a target device in order to seamlessly watch a content currently watched through the first device D1 in the second device D2, the first device D1 transmits a file streaming handover request to a first retailer 20a to request a streaming handover of a content file (step S272).

The file streaming handover request may include a content ID, a profile, an asset physical ID, playback start time information, etc. The profile is a media profile designated by the first device. It is assumed that the profile is set to 'HD' in the present embodiment. The playback start time information may be information of a time at which a target device starts the playback of the content.

Upon receiving the file streaming handover request, the first retailer 20a transmits to s second retailer 20b a file streaming handover request corresponding to the received file streaming handover request (step S273).

Upon receiving the file streaming handover request from the first retailer 20a, the second retailer 20b searches for a streaming provider capable of supporting the target device, i.e., the second device D2 (step S274). It is assumed in the present embodiment that the second streaming provider 40b is capable of supporting the streaming to the second device. Therefore, the second streaming provider 40b is found as the streaming provider capable of supporting the second device.

The second retailer 20b may perform media profile matching on the basis of a capability of the second device D2 (step S275). In step S275, the second retailer 20b determines whether a profile included in the file streaming handover request can be played back in the second device D2.

In this case, if the profile cannot be played back in the second device D2, the second retailer 20b searches for a profile that can be played back in the second device D2 and then sets the profile of the file streaming handover request. For example, if the second device D2 cannot play back HD-level media and can play back SD-level media, the second device D2 may modify the profile of the file streaming handover request from 'HD' to 'SD'.

Subsequently, the second retailer 20b transmits a content streaming handover request to the second streaming provider 40b to request content streaming (step S276). The transmitted content streaming handover request may include a device ID, a content ID, a profile, an asset physical ID, a stream ID, playback start time information, etc. Herein, the device ID may be identification information of the second device D2, i.e., the target device for playing back the streaming content. The profile is modified to 'SD' by the second retailer 20b.

Upon receiving the content streaming handover request from the second retailer 20b, the second streaming provider 40b adds a new streaming queue item to a stream queue assigned to the second device D2 on the basis of the received file streaming handover request (step S277).

Subsequently, the second streaming provider 40b transmits a right token validation request to a coordinator 52 to request to validate a right token of the user (step S278). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the second streaming provider 40b to report that the requested streaming is authorized (step S279).

Upon receiving the right token validation response, the second streaming provider 40b may stream the content to the second device D2 (step S280). In this case, the second streaming provider may stream the content starting from a time designated by playback start time information.

The second streaming provider 40b transmits a streaming confirm to the second retailer 20b (step S281), and deletes the streaming queue item from a stream queue assigned to the second device D2 (step S283). Upon receiving the streaming confirm from the second streaming provider 40b, the second retailer 20b transmits a streaming handover response to the first retailer 20a (step S282).

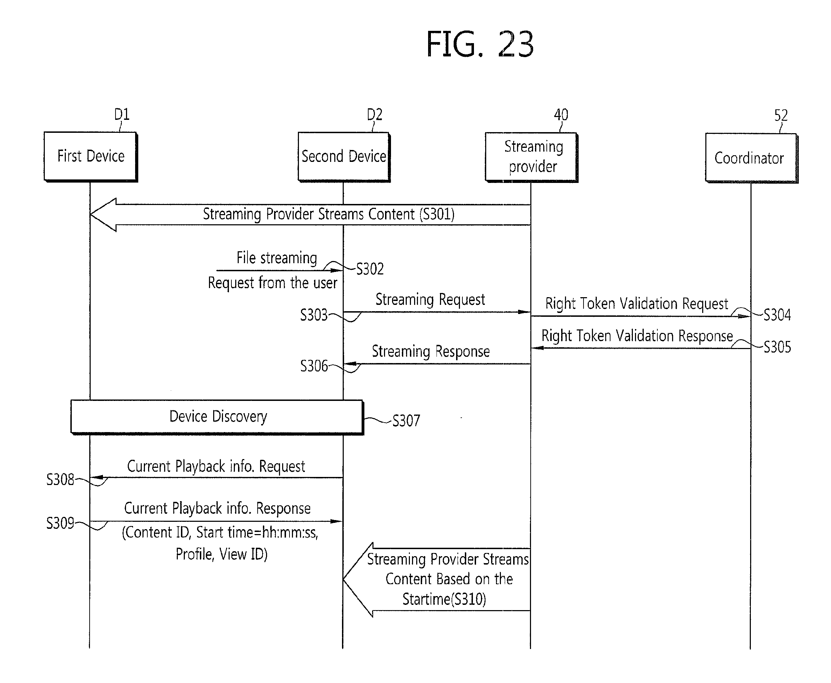

FIG. 23 is a flowchart showing an example in which a second device seamlessly plays back a content, watched in a streaming manner in a first device, in a streaming manner on the basis of playback information acquired from the first device according to another embodiment of the present invention.

Referring to FIG. 23, the first device D1 may play back a content received from a streaming provider 40 in a streaming manner (step S301). In this case, it is assumed that a user watches a content watched through the first device D1 until a specific time point.

The user may call a streaming menu provided in the second device D2 and then may request streaming for the content (step S302). Upon receiving the request, the second device D2 may transmit a streaming request to the streaming provider 40 to request to stream the content in response to the request (step S303).

Upon receiving the streaming request, the streaming provider 40 transmits a right token validation request to a coordinator 52 to request to validate a right token of the user (step S304). Herein, the right token validation may be for validating whether the user has a streaming right on the content.

The coordinator 52 confirms whether the user has the streaming right on the content through the right token validation. If it is confirmed that the user has the right, in response to the right token validation request, the coordinator 52 transmits a right token validation response to the streaming provider 40 to report that the requested streaming is authorized (step S305).

Upon receiving the right token validation response, the streaming provider 40 transmits a streaming response to the second device D2 to report that the content is streamed (step S306), and prepares to stream the content to the second device D2.

Meanwhile, during the streaming provider 40 prepares for the streaming of the content, the second device D2 may perform a device discovery according to a procedure determined to discover the first device D1 (step S307). When the device discovery is performed, the second device D2 may exchange a discovery request and response message with respect to the first device D1. In addition, the second device D2 may store in advance a list of recently accessed devices and use it when the device discovery is performed.

Upon the discovery of the first device D1, the second device D2 may transmit a current playback information request to the first device D1 to request playback information related to a content currently played back (step S308). The current playback information request may include information for requesting a property set of an asset currently played back in the first device. That is, properties and a status of a content object currently played back in the first device can be retrieved. The current playback information request may include information indicating that a content is to be provided to the second device D2 in a streaming manner.

In response thereto, the first device D1 transmits a current playback information response (step S309). The current playback information response may include requested properties, e.g., a content ID, a profile, a view ID, playback start time information, an asset physical ID, etc. The playback start time information may imply information of a time at which a target device starts the playback of the content. For example, the playback start time information may include information of time/minute/second (HH:MM:SS) at which the playback starts.

Meanwhile, when transmitting a message for discovering the first device D1, the second device D2 may insert request information for requesting a property of an asset currently played back, and may acquire current playback information of the first device D1 in response thereto.

Upon receiving the current playback information response, the second device D2 may receive streaming from the streaming provider 40 on the basis of the playback start time (step S310). For example, the second device D2 may transmit a request to the streaming provider 40 to request to stream the content from a part corresponding to the playback time start information, and upon receiving the content streaming from the part corresponding to the playback start time from the streaming provider 40, may playback the content starting from the playback start time.

If the content streaming of up to the playback start time has already been received in a buffer of the second device D2 while performing steps S307 to S309 for acquiring the current playback information response, the second device D2 may play back the content starting from the playback start time on the basis of the content received in the buffer.

Meanwhile, before playing back the content starting from the playback start time, the second device D2 may display a message for confirming whether to resume the playback after a part watched in the first device D1 in a screen, and upon receiving a response desiring the playback resumption, may play back the content starting from the playback start time.

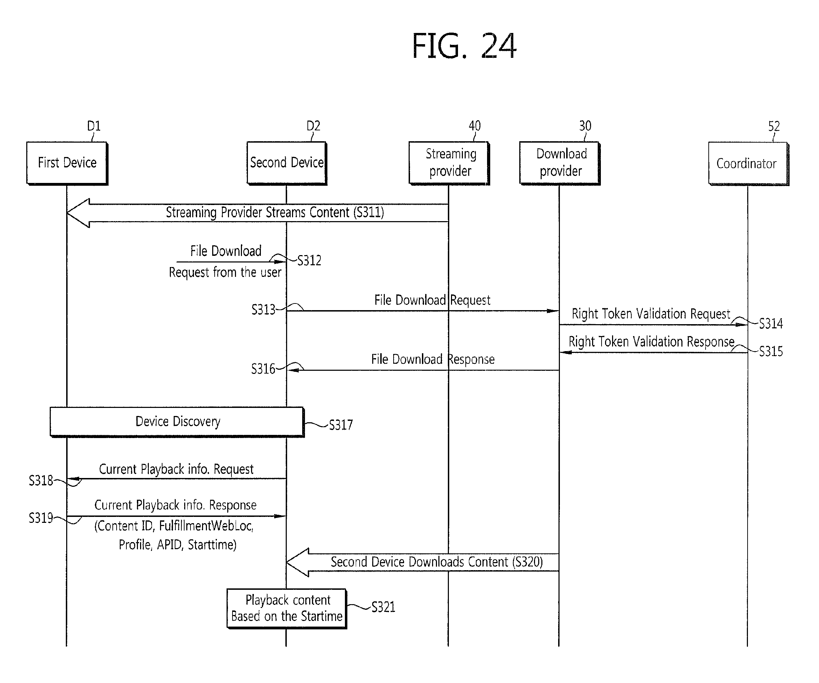

FIG. 24 is a flowchart showing an example in which a second device downloads a content watched in a streaming manner in a first device on the basis of playback information acquired from the first device and seamlessly plays back the content according to another embodiment of the present invention.

Referring to FIG. 24, the first device D1 may play back a content received from a streaming provider 40 in a streaming manner (step S311). In this case, it is assumed that a user watches a content watched through the first device D1 until a specific time point.

The user may call a download menu provided in the second device D2 and then may request streaming for the content (step S312). Upon receiving the request, the second device D2 may transmit a download request to a download provider 30 to request to download the content in response to the request (step S313).

Upon receiving the download request, the download provider 30 transmits a right token validation request to a coordinator 52 to request to validate a right token of the user (step S314). Herein, the right token validation may be for validating whether the user has a download right on the content.

The coordinator 52 confirms whether the user has the download right on the content through the right token validation. If it is confirmed that the user has the right, in response to the right token validation request, the coordinator 52 transmits a right token validation response to the download provider 30 to report that the requested download is authorized (step S315).

Upon receiving the right token validation response, the download provider 30 transmits a file download response to the second device D2 to report that the content is downloaded (step S316), and downloads the content to the second device D2 (step S320).

Meanwhile, the second device D2 may perform a device discovery according to a procedure determined to discover the first device D1 (step S317). When the device discovery is performed, the second device D2 may exchange a discovery request and response message with respect to the first device D1. In addition, the second device D2 may store in advance a list of recently accessed devices and use it when the device discovery is performed.

Upon the discovery of the first device D1, the second device D2 may transmit a current playback information request to the first device D1 to request playback information related to a content currently played back (step S318). The current playback information request may include information for requesting a property set of an asset currently played back in the first device. That is, properties and a status of a content object currently played back in the first device can be retrieved. The current playback information request may include information indicating that a content is to be provided to the second device D2 in a downloading manner.

In response thereto, the first device D1 transmits a current playback information response (step S319). The current playback information response may include requested properties, e.g., a content ID, a profile, a view ID, playback start time information, an asset physical ID, etc. The playback start time information may imply information of a time at which a target device starts the playback of the content. For example, the playback start time information may include information of time/minute/second (HH:MM:SS) at which the playback starts.

Meanwhile, when transmitting a message for discovering the first device D1, the second device D2 may insert request information for requesting a property of an asset currently played back, and may acquire current playback information of the first device D1 in response thereto.

Upon receiving the current playback information response, the second device D2 may play back the content, downloaded from the content provider 30 on the basis of the playback start time, from the playback start time (step S321).

Meanwhile, before playing back the content starting from the playback start time, the second device D2 may display a message for confirming whether to resume the playback after a part watched in the first device D1 in a screen, and upon receiving a response desiring the playback resumption, may play back the content starting from the playback start time.

While the present invention has been particularly shown and described with reference to exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

## Claims

1. A method for seamless playback of content, the method comprising:
Discovering, by a second device, a first device which is currently playing back a content in response to a seamless playback request;
requesting the first device to transmit a property set related to a currently played back asset; and
seamlessly playing back the content on the basis of the property set transmitted from the first device.

2. The method of claim 1, wherein the property set related to the currently played back asset includes:
a content identifier (ID) for identifying the content;
an asset physical ID for identifying a physical asset corresponding to the content ID; and
playback start time information indicating a playback start time for the seamless playback.

3. The method of claim 2, further comprising:
transmitting a streaming request to any one of a streaming provider and the first device to request to stream the content starting from a time corresponding to the playback start time information; and
receiving from an entity which receives the streaming request a streaming content from the start time corresponding to the playback start time information.

4. The method of claim 2, further comprising:
receiving download location information for downloading the content from the first device;
transmitting a download request to any one of the download provider and the first device to download the content, on the basis of the download location information;
downloading the content from an entity which receives the download request; and
playing back the downloaded content from the start time corresponding to the playback start time information.

5. An apparatus for seamless playback of content, the apparatus comprising:
an interface for discovering a first device which is currently playing back a content in response to a seamless playback request, and for requesting the first device to transmit a property set related to a currently played back asset; and
a processor for seamlessly playing back the content on the basis of the property set transmitted from the first device.

6. The apparatus of claim 5, wherein the property set related to the currently played back asset includes:
a content ID for identifying the content;
an asset physical ID for identifying a physical asset corresponding to the content ID; and
playback start time information indicating a playback start time for the seamless playback.

7. The apparatus of claim 6, wherein the interface transmits a streaming request to any one of a streaming provider and the first device to request to stream the content starting from a time corresponding to the playback start time information, and receives from an entity which receives the streaming request a streaming content from the start time corresponding to the playback start time information.

8. The apparatus of claim 6,
wherein the interface receives download location information for downloading the content from the first device, transmits a download request to any one of the download provider and the first device to download the content, on the basis of the download location information, and downloads the content from an entity which receives the download request, and
wherein the processor plays back the downloaded content from the start time corresponding to the playback start time information.
